# EUROPEAN PATENT SPECIFICATION

(11) **EP 4 096 127 B1**
(45) Date of publication and mention of the grant of the patent: **03.12.2025**
(21) Application number: 21754488.1
(22) Date of filing: 02.02.2021
(51) Int. Cl.: H04L 1/00, H04W 72/04, H04W 8/22, H04W 8/24

(54) **USER EQUIPMENT CAPABILITY TRANSMISSION METHOD AND INFORMATION TRANSMISSION METHOD, AND RELATED PRODUCTS**
VERFAHREN ZUR ÜBERTRAGUNG DER FÄHIGKEITEN EINES BENUTZERGERÄTES UND VERFAHREN ZUR INFORMATIONSÜBERTRAGUNG SOWIE ZUGEHÖRIGE PRODUKTE
PROCÉDÉ DE TRANSMISSION DE CAPACITÉ D'ÉQUIPEMENT UTILISATEUR ET PROCÉDÉ DE TRANSMISSION D'INFORMATIONS, ET PRODUITS ASSOCIÉS

(30) Priority: 14.02.2020 CN 202010094925; 27.02.2020 CN 202010124777
(43) Date of publication of application: 30.11.2022
(73) Proprietor: Huawei Technologies Co., Ltd., Shenzhen, Guangdong 518129 (CN)
(72) Inventor: KUANG, Yiru, Shenzhen, Guangdong 518129 (CN); LI, Bingzhao, Shenzhen, Guangdong 518129 (CN); WANG, Yi, Shenzhen, Guangdong 518129 (CN); PENG, Wenjie, Shenzhen, Guangdong 518129 (CN)
(74) Representative: Maiwald GmbH
(86) International application number: PCT/CN2021/074751
(87) International publication number: WO 2021/159989

(56) References cited:
- WO-A1-2018/081597
- CA-A1- 3 099 321
- CN-A- 107 980 234
- CN-A- 107 996 031
- CN-A- 109 151 931
- US-A1- 2017 279 580
- US-A1- 2019 044 678
- US-A1- 2019 394 688
- US-A1- 2019 394 688
- US-A1- 2020 037 383
- US-A1- 2020 045 685
- SAMSUNG: "UE capability handling for FDD/TDD and FR1/FR2", vol. RAN WG2, no. Spokane, WA, USA; 20181112 - 20181116, 12 November 2018 (2018-11-12), XP051556543, Retrieved from the Internet <URL:http://www.3gpp.org/ftp/Meetings%5F3GPP%5FSYNC/RAN2/Docs/R2%2D1816989%2Ezip> [retrieved on 20181112]
- NTT DOCOMO ET AL: "Implementation of L1/RF/RRM capabilities from RAN1/4", vol. RAN WG2, no. Athens, Greece; 20180226 - 20180302, 22 February 2018 (2018-02-22), XP051400817, Retrieved from the Internet <URL:http://www.3gpp.org/ftp/tsg%5Fran/WG2%5FRL2/TSGR2%5F101/Docs/> [retrieved on 20180222]

## Description

### TECHNICAL FIELD

The present invention relates to the field of communications technologies, and in particular, to a user equipment capability transmission method, an information transmission method, and related products.

### BACKGROUND

Owing to rapid development of integrated circuit technologies, battery technologies, and wireless communications technologies, a processing capability of a wireless communications terminal has been greatly improved. A current wireless communications terminal not only can run a more complex application program, but also can support a longer standby time, and further support a mobile communications standard with higher performance but more complexity. For example, in terms of wireless communications performance, current wireless communications terminals generally support more antennas, higher-order modulation and coding schemes (Modulation and Coding Scheme, MCS), and more complex multiplexing technologies. In this case, that a wireless communications terminal notifies a network of its own processing capabilities can undoubtedly help the network provide a better service for the wireless communications terminal.

For example, user equipment (user equipment, UE) reports its own wireless access capabilities to a network, so that the network performs proper configuration based on the UE's capabilities to implement communication between the UE and a base station. The UE's capabilities include related capabilities of the UE in a work mode with frequency division duplex (Frequency-division Duplex, FDD)/time division duplex (Time-division Duplex, TDD) and frequency range 1 (Frequency Range 1, FR1)/frequency range 2 (Frequency Range 2, FR2).

UE may report its related capabilities in different work modes to a network based on an existing reporting rule. However, limited by a reporting manner, the UE can report its related capabilities only in some work modes, but fails to report the capabilities in some other work modes.

United States patent application US 2019/394688 A1 describes that a UE may explicitly report voice call capabilities via one or more system-level parameters that are transmitted to the base station. The base station may operate in a first radio access network (RAN), such as a 5G or new radio (NR) RAN. In cases where the UE indicates a capability for packet switched voice calls via the first RAN, one or more voice calls may be established with the UE via the first RAN. In cases where the UE indicates that it is not capable of packet switched voice calls via the first RAN, the UE may fall back to a different RAN (e.g., a 4G or LTE RAN, a 3G RAN, or a 2G RAN) for voice calls. United States patent application US 2019/394688 A1 describes that a base station may send a UE capability enquiry request causing the UE to send capability information to the base station.

United States patent application US 2017/279580 A1 describes a method for wireless communication wherein a user equipment indicates to a base station the number of uplink component carriers that the user equipment is capable of supporting and the base station configures the user equipment for carrier aggregation and for one or more auxiliary uplink component carriers.

United States patent application US 2020/045685 A1 describes a wireless communication method wherein a base station receives information identifying one or more antenna switching capabilities and one or more carrier switching capabilities for a user equipment and determines an antenna switching capability for a target carrier combination based at least in part on the one or more antenna switching capabilities or the one or more carrier switching capabilities.

United States patent application US 2019/044678 A1 describes several techniques for facilitating sounding reference signal (SRS) switching.

United States patent application US 2020/037383 A1 describes a wireless communication method wherein a user equipment determines an antenna switching capability for the user equipment and signals a set of band combinations and the antenna switching capability to a base station.

### SUMMARY

The invention is set out in the appended independent claims, wherein further embodiments are set out in the appended independent claims.

### BRIEF DESCRIPTION OF DRAWINGS

FIG. 1 is a schematic flowchart of reporting UE capabilities according to an example useful for understanding this application;
FIG. 2 is a schematic diagram of fields for reporting UE capabilities according to an example useful for understanding this application;
FIG. 3 is an architectural diagram of a communications system according to an example useful for understanding this application;
FIG. 4 is a schematic flowchart of a user equipment capability transmission method according to an example useful for understanding this application;
FIG. 5 is a schematic flowchart of another user equipment capability transmission method according to an example useful for understanding this application;
FIG. 6 is a schematic flowchart of another user equipment capability transmission method according to an example useful for understanding this application;
FIG. 7 is a schematic flowchart of another user equipment capability transmission method according to an example useful for understanding this application;
FIG. 8 is a schematic structural diagram of user equipment according to an example useful for understanding this application;
FIG. 9 is a schematic structural diagram of another user equipment according to an example useful for understanding this application;
FIG. 10 is a schematic structural diagram of an access network device according to an example useful for understanding this application;
FIG. 11 is a schematic structural diagram of another access network device according to an example useful for understanding this application;
FIG. 12 is a schematic flowchart of an information transmission method according to an example useful for understanding this application;
FIG. 13 is a schematic flowchart of another information transmission method according to an example useful for understanding this application;
FIG. 14 is a schematic diagram of fields included in third information in another information transmission method according to an example useful for understanding this application; and
FIG. 15 is a schematic flowchart of another information transmission method according to an embodiment of this application.

### DESCRIPTION OF EMBODIMENTS

The technical solutions in the embodiments of this application may be applied to a Long Term Evolution (Long Term Evolution, LTE) architecture, or may be further applied to a Universal Mobile Telecommunications System (Universal Mobile Telecommunications System, UMTS) Terrestrial Radio Access Network (UMTS Terrestrial Radio Access Network, UTRAN) architecture, or a Global System for Mobile Communications (Global System for Mobile Communications, GSM), an Enhanced Data rates for GSM Evolution radio access network (GSM EDGE Radio Access Network, GERAN) architecture, a New Radio (New radio, NR) architecture, or even a post-5G architecture.

User equipment in the embodiments of this application may be a device that provides a user with voice and/or data connectivity, for example, may include a handheld device with a radio connection function, or a processing device connected to a radio modem. The user equipment may communicate with a core network over a radio access network (radio access network, RAN), and exchange voice and/or data with the RAN. The user equipment may include wireless user equipment, mobile user equipment, device-to-device (device-to-device, D2D) user equipment, vehicle-to-everything (vehicle-to-everything, V2X) user equipment, machine-to-machine/machine type communication (machine-to-machine /machine-type communications, M2M/MTC) user equipment, Internet of Things (Internet of things, IoT) user equipment, a subscriber unit (subscriber unit), a subscriber station (subscriber station), a mobile station (mobile station), a remote station (remote station), an access point (access point, an AP), a remote terminal (remote terminal), an access terminal (access terminal), a user terminal (user terminal), a user agent (user agent), a user device (user device), or the like. For example, the user equipment may include a mobile phone (or referred to as a "cellular" phone), a computer with mobile user equipment, a portable, pocket-sized, handheld, computer-built-in mobile apparatus, and the like. For example, the user equipment may be a device such as a personal communication service (personal communication service, PCS) phone, a cordless telephone set, a Session Initiation Protocol (session initiation protocol, SIP) phone, a wireless local loop (wireless local loop, WLL) station, or a personal digital assistant (personal digital assistant, PDA). The user equipment may further include a limited device, for example, a device with relatively low power consumption, a device with a limited storage capability, or a device with a limited computing capability. For example, the user equipment may include information sensing devices such as a barcode, radio frequency identification (radio frequency identification, RFID), a sensor, the Global Positioning System (global positioning system, GPS), and a laser scanner.

As an example rather than a limitation, in the embodiments of this application, the user equipment may further be a wearable device. The wearable device may also be referred to as a wearable intelligent device, an intelligent wearable device, or the like. It is a general term for devices that are wearable and are intelligently designed and developed from daily wear by using a wearable technology, such as glasses, gloves, watches, clothing, and shoes. A wearable device is a portable device that is worn directly on the body or integrated into a user's clothing or accessories. A wearable device is not only a hardware device, but also implements powerful functions through software support, data interaction, and cloud-based interaction. A wearable intelligent device in a broad sense includes a device that has full functions, is large in size, and can implement all or some functions without depending on a smartphone, for example, a smart watch or smart glasses; and a device that focuses only on a specific type of application function and needs to be used with another device such as a smartphone, for example, a smart band, a smart helmet, and smart jewelry for physical sign monitoring.

If the various user equipments described above are located on vehicles (for example, placed or installed in the vehicles), they may be considered as in-vehicle user equipments. For example, in-vehicle user equipment is also referred to as an on-board unit (on-board unit, OBU). The embodiments of this application set no limitation thereto.

The embodiments of this application further relate to an access network (Access network, AN) device. The AN device may be a device that communicates with wireless user equipment over an air interface in an access network by using one or more cells, for example, a NodeB (for example, an access point). The NodeB may be configured to perform mutual conversion between a received over-the-air frame and an Internet Protocol (IP) packet, and serve as a router between the user equipment and a remaining part of the access network, where the remaining part of the access network may include an IP network. For example, the NodeB may be an evolved NodeB (evolved NodeB, eNB, or e-NodeB, evolutionary NodeB) in a Long Term Evolution (long term evolution, LTE) system or Long Term Evolution Advanced (long term evolution-advanced, LTE-A), or may include a New Radio network device gNB in a 5th Generation (the 5th generation, 5G) NR system. The AN device may alternatively be an access network device in a vehicle-to-everything (Vehicle to Everything, V2X) technology, which is a roadside unit (road side unit, RSU). The RSU may be a fixed infrastructure entity that supports V2X applications, and may exchange messages with other entities that support V2X applications. In addition, the AN device may further include a centralized unit (centralized unit, CU) and a distributed unit (distributed unit, DU) in a cloud radio access network (cloud radio access network, Cloud RAN) system. In this case, the AN device coordinates attribute management on air interfaces. The AN device is not limited in the embodiments of this application.

For ease of understanding this application, technical knowledge related to the embodiments of this application is first described herein.

After UE accesses a network, for example, after the UE is powered on, discovers a network of an operator (China Mobile, China Unicom, or China Telecom), and accesses the network, the UE needs to report its UE capabilities to an AN device of the operator, so that the AN device performs proper configuration based on the UE capabilities. With the proper configuration, the UE can perform data communication with the AN device.

In the 3rd Generation Partnership Project (the 3rd Generation Partnership Project, 3GPP) standardization of UTRAN, it has been agreed to use a UE capability information (UE Capability Information) message to report UE capabilities. For example, the UE capability information message may be used to report the UE' capabilities in a plurality of radio access technologies (Radio Access Technology, RAT). The UE capability information message may be radio resource control (Radio Resource Control, RRC) signaling.

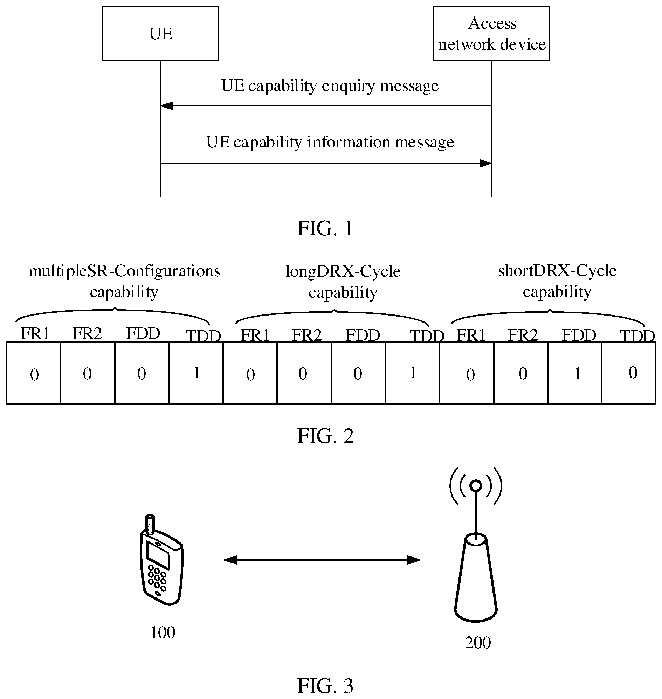

FIG. 1 is a schematic flowchart of reporting UE capabilities according to an embodiment of this application.

An access network device sends a UE capability enquiry (UE Capability Enquiry) message to UE, to request the UE to report the UE capabilities. For example, the UE capability enquiry message may carry indication information of a radio access technology type (Radio Access Technology Type, RAT-Type). If the radio access technology type indicated by the indication information is NR, the access network device requests the UE to report the UE's related capabilities in NR. After receiving the UE capability enquiry message, the UE sends a UE capability information message to the access network device, where the UE capability information message carries UE capability information, and the UE capability information is used to indicate UE capabilities. For example, the UE may add its capability information in NR to the UE capability information message, to indicate the UE's related capabilities in NR. After receiving the UE capability information message, the access network device parses the UE capability information message, and obtains the UE capabilities based on the UE capability information carried in the UE capability information message.

The UE capabilities include a related capability supported by the UE in each work mode. Each work mode is obtained by randomly combining one or two work modes selected from frequency division duplex (Frequency-division Duplex, FDD) and time division duplex (Time-division Duplex, TDD) with one or two work modes selected from frequency range 1 (Frequency Range 1, FR1) and frequency range 2 (Frequency Range 2, FR2). Therefore, the work modes include frequency division duplex-frequency range 1 FDD-FR1, frequency division duplex-frequency range 2 FDD-FR2, time division duplex-frequency range 1 TDD-FR1, and time division duplex-frequency range 2 TDD-FR2. FR1 is a frequency range lower than or equal to 6 GHz, for example, a frequency range of 450 MHz to 6 GHz. FR2 is a frequency range higher than 6 GHz, for example, a frequency range of 24 GHz to 52 GHz.

The related capability supported by the UE in each work mode may include but is not limited to one or more of the following capabilities: a physical (Physical, PHY) layer-related capability, a Medium Access Control (Medium Access Control, MAC) layer-related capability, and a measurement-related capability. The MAC layer-related capability may include but is not limited to one or more of the following capabilities: a longDRX-Cycle (longDRX-Cycle) capability, a shortDRX-Cycle (shortDRX-Cycle) capability, a multipleSR-Configurations (multipleSR-Configurations) capability, and a multipleConfiguredGrants (multipleConfiguredGrants) capability. The measurement-related capability may include but is not limited to one or more of the following capabilities: an intraAndInterF-MeasAndReport (intraAndInterF-MeasAndReport) capability, an eventA-MeasAndReport (eventA-MeasAndReport) capability, and a handoverInterF (handoverInterF) capability.

Further, the related capabilities supported in the work modes may be classified into a common capability, a non-common capability, and a special capability. The common capability is a related capability supported by the UE in all the work modes. The non-common capability is a related capability that is different between FDD and TDD or between FR1 and FR2. The special capability includes, for example, a related capability that is supported by the UE in TDD but not in FDD.

According to a current protocol, a rule for the UE to report the related capability supported in each work mode is as follows:

The common capability is reported by reporting 1 in a field named common. The special capability is reported in the common field. The non-common capability that is different between FDD and TDD is reported by adding Fdd-Add or TDD-Add. The non-common capability that is different between FR1 and FR2 is reported by adding FR1-Add or FR2-Add.

Specifically, each related capability corresponds to one 1-bit field in the common field. To report a supported common capability, the UE needs to set a field corresponding to the capability in the common field to 1 for reporting. For example, if capability A is a common capability, a field corresponding to capability A is set to 1 in the corresponding common field. Then, the access network device parses the field corresponding to capability A in the common field, to determine that the UE can support capability A.

A special capability is, when the UE does not support a specific work mode, a capability that is not differentiated between other work modes. For example, if the UE does not support FDD and capability A is the special capability, the field corresponding to capability A in the common field is also set to 1, to report to the access network device that capability A is supported in TDD.

It should be noted that, before reporting a capability, the UE needs to first report its supported work modes, so as to determine a work scenario corresponding to the capability reported in the common field. For example, if the supported work modes reported by the UE are FR1, FR2, FDD, and TDD, it is determined that a capability reported in the common field is a capability supported in all of FR1, FR2, FDD, and TDD. If the work modes supported by the UE are FR1, FR2, and FDD, it is determined that a capability reported in the common field is a capability supported in all of FR1, FR2, and FDD.

Reporting a non-common capability is essentially assigning a value to a bit corresponding to a related field of each related capability, to be specific, is a manner of adding (Add) a value to the related field. Then, a value result is used as UE capability information, so as to report the capability and a work mode corresponding to the capability to the access network device. It may be understood that, reporting a work mode corresponding to each capability is equivalent to reporting capabilities supported by the UE in different work modes.

Specifically, each related capability has four related fields, and the four fields include an FR1 field, an FR2 field, an FDD field, and a TDD field. The FR1 and FR2 fields are used as examples for description. If FR1 and FR2 correspond to a same capability, to be specific, both FR1 and FR2 support a related capability or do not support the related capability, the FR1 and FR2 fields of the related capability each are set to 0. If not both of FR1 and FR2 support the related capability, the FR1 and FR2 fields of the related capability are set to opposite values (0 and 1). In addition, if FR1 supports the related capability, the FR1 field is set to 1 and the FR2 field is set to 0; or if FR2 supports the related capability, the FR2 field is set to 1 and the FR1 field is set to 0.

Therefore, for a non-common capability that is different between FDD and TDD, the non-common capability is reported by setting the FR1 and FR2 fields to 0, and adding 0 or 1 to the FDD or TDD field. That is, the non-common capability is reported by adding Fdd-Add or TDD-Add. The preceding value assignment rule corresponds to old mapping relationships. If values of the FR1, FR2, FDD, and TDD fields do not comply with the rule, the values are invalid.

The following uses FIG. 2 as an example to describe reporting of a related capability supported by each work mode. If the multipleSR-Configurations capability is the same between FR1 and FR2, and is supported in TDD but not in FDD, as shown in FIG. 2, the FR1, FR2, FDD, and TDD fields corresponding to the multipleSR-Configurations capability are set to (0 0 0 1). Similarly, if the longDRX-Cycle capability is the same between FR1 and FR2, and is supported in TDD but not in FDD, the FR1, FR2, FDD, and TDD fields corresponding to the longDRX-Cycle capability are set to (0 0 0 1). If the shortDRX-Cycle capability is the same between FR1 and FR2, but is not supported in FDD and TDD, the FR1, FR2, FDD, and TDD fields of the shortDRX-Cycle capability are set to (0 0 1 0).

In addition, correspondences (also referred to as old mapping relationships in this application) between some values of the FR1, FR2, FDD, and TDD fields and work modes have been established currently. For the old mapping relationships, refer to Table 1.

**Table 1:**

| FR1 | FR2 | FDD | TDD | Work mode | Bit value |
|---|---|---|---|---|---|
| 0 | 0 | 0 | 0 | Nonexistent or invalid | Nonexistent or invalid |
| 0 | 0 | 0 | 1 | TDD-FR1 and TDD-FR2 | (0 0 0 1) |
| 0 | 0 | 1 | 0 | FDD-FR1 and FDD-FR2 | (0 0 1 0) |
| 0 | 1 | 0 | 0 | FDD-FR2 and TDD-FR2 | (0 1 0 0) |
| 0 | 1 | 0 | 1 | TDD-FR2 | (0 1 0 1) |
| 0 | 1 | 1 | 0 | FDD-FR2 | (0 1 1 0) |
| 1 | 0 | 0 | 0 | FDD-FR1 and TDD-FR1 | (1 0 0 0) |
| 1 | 0 | 0 | 1 | TDD-FR1 | (1 0 0 1) |
| 1 | 0 | 1 | 0 | FDD-FR1 | (1 0 1 0) |

Based on Table 1, after values are assigned to the FR1, FR2, FDD, and TDD fields of each related capability, a work mode corresponding to the related capability is obtained. Then, a value result of the FR1, FR2, FDD, and TDD fields is used as the capability information and carried in the UE capability information message, and the related capability of the UE in each work mode may be reported to the access network device.

Based on the mapping relationships in Table 1, when a related field of each related capability corresponds to one value, the related capability corresponds to one or more work modes. In other words, with this value, the UE supports the related capability in the one or more work modes. Therefore, for ease of description, all work modes corresponding to each related capability are collectively referred to as one work scenario.

From a perspective of randomly combining work modes, the UE can support 16 work scenarios. When FR1 and FR2 support a same capability, both the FR1 and FR2 fields are set to 0. Alternatively, when FDD and TDD support a same capability, both the FDD and TDD fields are set to 0. Because both the FR1 and FR2 fields are set to 0 when FR1 and FR2 correspond to the same capability or both the FDD and TDD fields are set to 0 when FDD and TDD correspond to the same capability, it is impossible that three of the FR1, FR2, FDD, and TDD fields are all set to 1, and consequently less than three of FDD, TDD, FR1, and FR2 are supported in the reported work modes. As a result, related capabilities supported in six work scenarios cannot be reported to the access network device. The six work scenarios are scenario 1 (FDD-FR1 and TDD-FR2), scenario 2 (TDD-FR1 and FDD-FR2), scenario 3 (FDD-FR1, FDD-FR2, and TDD-FR2), scenario 4 (TDD-FR1, FDD-FR2, and TDD-FR2), scenario 5 (FDD-FR1, TDD-FR1, and TDD-FR2), and scenario 6 (FDD-FR1, TDD-FR1, and FDD-FR2). This application mainly describes how to report the related capabilities of the UE in the six work scenarios to the access network device.

This specification first describes two types of UEs and two types of access network devices related to this application.

New UE is UE preconfigured with preset mapping relationships (also referred to as new mapping relationships in this application), where the new mapping relationships are mapping relationships dedicated for one or more of the foregoing six work scenarios and specified based on the old mapping relationships for cases that the FR1, FR2, FDD, and TDD fields are assigned with invalid values, and the value-assignment manners correspond to the work scenarios one to one; and old UE is UE not preconfigured with the new mapping relationships and can report UE capabilities based only on the old mapping relationships: and
a new access network device is an access network device preconfigured with the new mapping relationships, and can parse, based on the new mapping relationships, capability information reported by UE to obtain a related capability of the UE; and an old access network device is an access network device not preconfigured with the new mapping relationships and can parse, based only on the old mapping relationships, capability information reported by UE to obtain a related capability of the UE.

FIG. 3 is a schematic structural diagram of a communications system according to an embodiment of this application. A communications system 10 includes user equipment 100 and an access network device 200. The user equipment 100 sends capability information to the access network device 200. The capability information is used to indicate related capabilities of the user equipment 100 in different work scenarios, and the work modes are obtained by combining frequency range 1 and frequency range 2 with frequency division duplex and time division duplex. The combination includes at least one of the following combination manners: FR1 is combined with one of FDD, TDD and FR2 is combined with the other, and FR1 is separately combined with FDD and TDD; FR2 is combined with one of FDD and TDD and FR1 is combined with one of FDD and TDD; and FR2 is separately combined with FDD and TDD. In other words, each work mode includes at least three of FR1, FR2, FDD, and TDD. The access network device 200 determines the capability information based on the preset mapping relationships, to obtain the related capabilities of the user equipment 100 in the different work scenarios. The different work scenarios include scenario 1 (FDD-FR1 and TDD-FR2), scenario 2 (TDD-FR1 and FDD-FR2), scenario 3 (FDD-FR1, FDD-FR2, and TDD-FR2), scenario 4 (TDD-FR1, FDD-FR2, and TDD-FR2), scenario 5 (FDD-FR1, TDD-FR1, and TDD-FR2), and scenario 6 (FDD-FR1, TDD-FR1, and FDD-FR2).

For example, the UE determines values of the FR1, FR2, FDD, and TDD fields of each related capability. If the fields are set to (0 0 1 1), a work scenario corresponding to the related capability is scenario 1. After the values of the related FR1, FR2, FDD, and TDD fields are reported to the access device, it is equivalent to that the UE reports to the access network device that the related capability is supported in both the FDD-FR1 and TDD-FR2 work modes.

It can be learned that, in the embodiments of this application, the user equipment may send, to the access network device, the capability information corresponding to the work scenarios obtained by combining frequency range 1 and frequency range 2 with frequency division duplex and time division duplex, so as to report the related capabilities of the user equipment in the various work scenarios to the access network device.

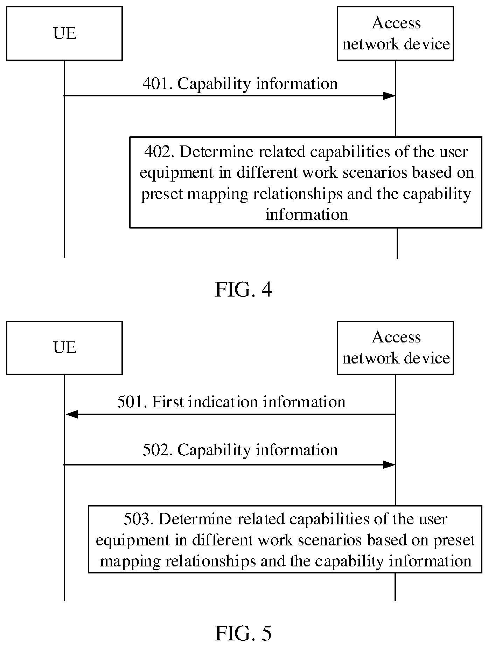

FIG. 4 is a schematic flowchart of a user equipment capability transmission method according to an embodiment of this application. The method includes but is not limited to the following steps.

401. User equipment sends capability information to an access network device.

The capability information is used to indicate related capabilities of the user equipment in different work scenarios, and the work scenarios are obtained by combining frequency range 1 and frequency range 2 with frequency division duplex and time division duplex. The combination includes at least one of the following combination manners: FR1 is combined with one of FDD and TDD, FR2 is combined with the other, and FR1 is separately combined with FDD and TDD; FR2 is combined with one of FDD and TDD and FR1 is combined with one of FDD and TDD; and FR2 is separately combined with FDD and TDD. Therefore, each of the different work scenarios includes at least three of frequency range 1, frequency range 2, frequency division duplex, and time division duplex.

The different work scenarios may include one or more of the foregoing six work scenarios.

Optionally, for a non-common capability, the capability information may reuse existing fields corresponding to the non-common capability, to be specific, reuse the FR1, FR2, FDD, and TDD fields of the non-common capability. Then, new values, namely, the invalid values in Table 1, may be assigned to the FR1, FR2, FDD, and TDD fields, so that the invalid values are used to indicate the foregoing six work scenarios. Because the existing fields are reused, there is no need to construct new fields, and signaling overheads are reduced.

Certainly, a new field may be used for the capability information, for example, a new related field may be constructed for each related capability in a first message, and then a value corresponding to this new field is used as the capability information. This application sets no limitation thereto.

The capability information may be included in an existing UE capability information message for reporting. Alternatively, it may be included in a new message for reporting, for example, new RRC signaling may be used to specifically report the related capabilities in the foregoing six work scenarios. This application sets no limitation thereto.

402. The access network device determines related capabilities of the user equipment in different work scenarios based on preset mapping relationships and the capability information.

It can be learned that, in this embodiment of this application, the user equipment may send, to the access network device, the capability information corresponding to the work scenarios obtained by combining frequency range 1 and frequency range 2 with frequency division duplex and time division duplex, so as to report the related capabilities of the user equipment in the various work scenarios to the access network device.

In a possible implementation, the existing fields are still reused for the capability information for the foregoing six work scenarios. Because the existing fields occupy 4 bits in total, there are a total of 16 value combinations for the four bits. However, in the current technology, eight values have been used to report eight existing work scenarios. Moreover, two other values (0 0 0 0) and (1 1 1 1) are special values and are invalid. In work scenarios corresponding to the two values, the UE reports related capabilities in the work scenarios in another reporting manner. For example, for a work scenario corresponding to the capability value (1 1 1 1), a capability supported by the work scenario may be reported to the access network device by reporting 1 in the common field. Therefore, six remaining values are unused. Table 2 lists the six unused values.

**Table 2:**

| | FR1 | FR2 | FDD | TDD | |
|---|---|---|---|---|---|
| No difference between frequency range 1 and frequency range 2 | 0 | 0 | 0 | 0 | Nonexistent or invalid (special value) |
| | 0 | 0 | 0 | 1 | Supported in TDD-frequency range 1 and TDD-frequency range 2, but not supported in FDD |
| | 0 | 0 | 1 | 0 | Supported in FDD-frequency range 1 and FDD-frequency range 2, but not supported in TDD |
| | 0 | 0 | 1 | 1 | Not supported theoretically. Both TDD and TDD need to support reporting in the common field. (In an existing protocol, this value is invalid and does not comply with protocol specifications) (Invalid value) |
| Not supported in frequency range 1, but supported in frequency range 2 | 0 | 1 | 0 | 0 | Supported in both FDD-frequency range 2 and TDD-frequency range 2 |
| | 0 | 1 | 0 | 1 | Supported in TDD-frequency range 2, but not supported in FDD |
| | 0 | 1 | 1 | 0 | Supported in FDD-frequency range 2, but not supported in TDD |
| | 0 | 1 | 1 | 1 | Not supported theoretically. (0 1 0 0) needs to be reported. (Invalid value) |
| Not supported in frequency range 2, but supported in frequency range 1 | 1 | 0 | 0 | 0 | Supported in both FDD-frequency range 1 and TDD-frequency range 1 |
| | 1 | 0 | 0 | 1 | Supported in TDD-frequency range 1, but not supported in FDD |
| | 1 | 0 | 1 | 0 | Supported in FDD-frequency range 1, but not supported in TDD |
| | 1 | 0 | 1 | 1 | Not supported theoretically. (1 0 0 0) needs to be reported. (Invalid value) |
| No difference between frequency range 1 and frequency range 2 | 1 | 1 | 0 | 0 | Not supported theoretically. Both frequency range 1 and frequency range 2 need to support reporting in the common field. (All of the four work modes are supported.) (Invalid value) |
| | 1 | 1 | 0 | 1 | Not supported theoretically. (0 0 0 1) needs to be reported. (Invalid value) |
| | 1 | 1 | 1 | 0 | Not supported theoretically. (0 0 1 0) needs to be reported. (Invalid value) |
| | 1 | 1 | 1 | 1 | Not supported theoretically. FDD-frequency range 1, FDD-frequency range 2, TDD-frequency range 1, and TDD-frequency range 2 all need to support reporting in the common field. (Special value) |

To reduce signaling overheads, the existing fields may be reused, to be specific, the remaining six invalid values (which may be the special values or invalid values other than the special values) may be used to indicate the foregoing six work scenarios and one-to-one mapping relationships between the six values and the six work scenarios may be established.

In addition, one-to-one mapping relationships may alternatively be established between some of the foregoing invalid values and some of the six work scenarios. The correspondences between the invalid values and the six values are not specifically limited in this application.

Table 3 lists the new mapping relationships according to an embodiment of this application. In Table 3, a description is provided by using an example in which indication manners are set for all the six work scenarios. The twelfth row in Table 3 is used as an example for description. Capability A is a non-common capability. For capability A, if a bit in the FR1 field is set to 0, a bit in the FR2 field is set to 0, a bit in the FDD field is set to 1, and a bit in the TDD field is set to 1, according to the new mapping relationships in Table 3, it is determined that the UE supports capability A in FDD-FR1 and TDD-FR2, but does not support capability A in TDD-FR1 and FDD-FR2.

**Table 3:**

| FR1 | FR2 | FDD | TDD | Work scenario | Bit value | |
|---|---|---|---|---|---|---|
| 0 | 0 | 0 | 0 | Nonexistent | Nonexistent or invalid | |
| 0 | 0 | 0 | 1 | TDD-FR1 and TDD-FR2 | (0 0 0 1) | Old mapping relationships |
| 0 | 0 | 1 | 0 | FDD-FR1 and FDD-FR2 | (0 0 1 0) | |
| 0 | 1 | 0 | 0 | FDD-FR2 and TDD-FR1 | (0 1 0 0) | |
| 0 | 1 | 0 | 1 | TDD-FR2 | (0 1 0 1) | |
| 0 | 1 | 1 | 0 | FDD-FR2 | (0 1 1 0) | |
| 1 | 0 | 0 | 0 | FDD-FR1 and TDD-FR1 | (1 0 0 0) | |
| 1 | 0 | 0 | 1 | TDD-FR1 | (1 0 0 1) | |
| 1 | 0 | 1 | 0 | FDD-FR1 | (1 0 1 0) | |
| 1 | 1 | 1 | 1 | FDD-FR1, FDD-FR2, TDD-FR1, and TDD-FR2 | Nonexistent or invalid | |
| 0 | 0 | 1 | 1 | FDD-FR1 and TDD-FR2 | (0 0 1 1) | New mapping relationships |
| 1 | 1 | 0 | 0 | TDD-FR1 and FDD-FR2 | (1 1 0 0) | |
| 0 | 1 | 1 | 1 | FDD-FR1, FDD-FR2, and TDD-FR2 | (0 1 0 0) | |
| 1 | 0 | 1 | 1 | TDD-FR1, FDD-FR2, and TDD-FR2 | (1 0 1 1) | |
| 1 | 1 | 0 | 1 | FDD-FR1, TDD-FR1, and TDD-FR2 | (1 1 0 1) | |
| 1 | 1 | 1 | 0 | FDD-FR1, TDD-FR1, and FDD-FR2 | (1 1 1 0) | |

It can be learned that, the new mapping relationships indicate related capabilities in the foregoing six work scenarios by defining new values for the bits corresponding to the existing FR1, FR2, FDD, and TDD fields of each related capability. In addition, compared with the old mapping relationships, the new mapping relationships do not change value assignment manners of the bits corresponding to the FR1, FR2, FDD, and TDD fields when indicating the eight reported work scenarios, thereby reducing signaling overheads.

Because the UE may have error implementation, and the access network device may have a fault tolerance mechanism, the UE may report some undefined information. When receiving the undefined information, the access network device automatically parses out a most possible meaning of the information based on the fault tolerance mechanism. Therefore, if the UE reports any one of the foregoing six values, the old access network device parses the bit values based on the fault tolerance mechanism, and a work scenario obtained by parsing by the old access network device based on the fault tolerance mechanism may be inconsistent with a work scenario indicated by a new mapping relationship.

For example, for the value (1 0 1 1), the access network device determines that the work scenarios are TDD-FR1, FDD-FR2, and TDD-FR2 based on the new mapping relationships. However, without the new mapping relationships, the access network device likely determines, based on the fault tolerance mechanism, that the UE does not report 0s assigned to the two bits corresponding to the FDD and TDD fields when the UE sends the capability information, and the access network device determines that the value (1 0 1 1) is essentially (1 0 0 0), and thus determines that the work scenarios are FDD-FR1 and TDD-FR1. Consequently, a work scenario determined by the access network device is inconsistent with a work scenario actually indicated by the bit value (1 0 1 1).

Therefore, to resolve a compatibility problem caused by the fault tolerance mechanism, solutions shown in FIG. 5 to FIG. 7 are specifically proposed.

If the UE has no error implementation, but the access network device has a fault tolerance mechanism, refer to FIG. 5. FIG. 5 is a schematic flowchart of another user equipment capability transmission method according to an embodiment of this application. In this embodiment, content the same as that in the embodiment shown in FIG. 4 is not repeated. The method includes but is not limited to the following steps.

501. An access network device sends first indication information to user equipment.

If the access network device is a new access network device, to let the user equipment know that the access network device supports the new mapping relationships, the access network device may send the first indication information to the user equipment. The first indication information is used to indicate that the user equipment is allowed to send capability information, to be specific, the user equipment is allowed to send the capability information based on the new mapping relationships. It should be noted that, if the access network device is an old one, the access network device does not send the first indication information.

The first indication information may be included in an existing UE capability enquiry message for reporting, that is, a new field may be added to the UE capability enquiry message, and the new field is used to carry the first indication information. For example, a 1-bit new field may be added to the end of fields in the UE capability enquiry message, and when the bit of the new field is set to 1, it indicates that the access network device supports the new mapping relationships. Alternatively, the first indication information may be included in a new message for reporting, and the first indication information may be sent to the user equipment by using the new message. The new message may be an RRC message. This application sets no limitation thereto.

502. The user equipment sends capability information to the access network device.

If the UE is a new UE, and the access network device is a new access network device, after receiving the first indication information, the new UE determines that the access network device supports the new mapping relationships. Therefore, if the new UE sends the capability information to the access network device by using the new mapping relationships, the access network device correctly parses the capability information based on the new mapping relationships, to obtain related capabilities of the new UE in the six work scenarios.

If the UE is an old UE, and the access network device is a new access network device, after receiving the first indication information, the old UE cannot parse the first indication information and does not support the new mapping relationships. Therefore, the old UE sends capability information corresponding to the foregoing 10 work scenarios by using only the old mapping relationships. If the access network device is an old one, the access network device does not send the first indication information. In this case, neither the old UE nor the new UE uses the new mapping relationships to send the capability information to the access network device. Therefore, the old access network device does not incorrectly parse the capability information.

It should be noted that, if the UE does not receive the first indication information, because the UE has no error implementation, both the new UE and the old UE send, to the access network device, existing UE capability information only, that is, the UE capability information corresponding to the foregoing 10 work scenarios.

503. The access network device determines related capabilities of the user equipment in different work scenarios based on preset mapping relationships and the capability information.

It can be learned that, in this embodiment of this application, if the UE has no error implementation but the access network device has a fault tolerance mechanism, the access network device may indicate, by using the first indication information, whether the access network device supports the new mapping relationships, so as to correctly parse the capability information reported by the new UE and obtain the related capabilities of the new UE in the different work scenarios.

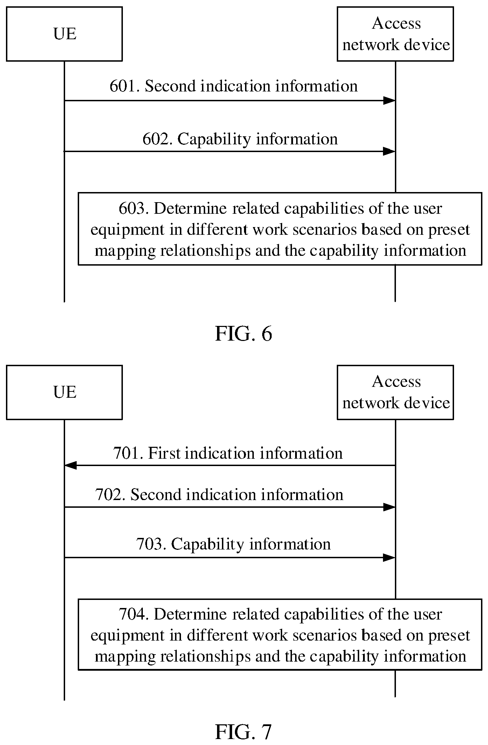

If the UE has error implementation, but the access network device has no fault tolerance mechanism, refer to FIG. 6.

FIG. 6 is a schematic flowchart of another user equipment capability transmission method according to an embodiment of this application. In this embodiment, content the same as that in the embodiments shown in FIG. 4 and FIG. 5 is not repeated. The method includes but is not limited to the following steps.

601. User equipment sends second indication information to an access network device.

If the UE is a new UE, to let the access network device know that the new UE sends capability information by using the new mapping relationships, the UE needs to send the second indication information to the access network device. The second indication information is used to indicate that the user equipment supports using preset mapping relationships to indicate related capabilities of the user equipment in different work scenarios.

Optionally, the second indication information may be included in a UE capability information message. To be specific, a new field is added to the UE capability information message, and the new field is used to carry the second indication information. For example, a 1-bit new field may be added to the end of fields in the UE capability information message. When the bit of the new field is set to 1, it indicates that the user equipment supports using the preset mapping relationships to indicate the related capabilities of the user equipment in the different work scenarios. In this case, step 601 does not need to be separately performed, and step 601 and step 602 may be performed together.

In addition, the second indication information may further be included in a new message for reporting. This application sets no limitation thereto.

It should be noted that, if the UE is an old UE, it does not send the second indication information to the access network device.

602. The user equipment sends capability information to the access network device.

If the UE is a new UE, it may send capability information corresponding to the six work scenarios to the access network device based on the new mapping relationships. Because the access network device receives the second indication information sent by the UE, the access network device determines that the new UE supports using the new mapping relationships. Therefore, if the access network device is a new access network device, it may parse the capability information by using the new mapping relationships, to obtain related capabilities corresponding to the UE in the six work scenarios. If the access network device is an old one, because the old access network device does not have a fault tolerance mechanism, it ignores the capability information corresponding to the six work scenarios, so as to correctly parse the capability information sent by the new UE.

If the UE is an old UE, it does not report the second indication information. Because the old access network device does not have a fault tolerance mechanism, even if the UE sends capability information corresponding to any one of the foregoing six work scenarios to the old access network device due to error implementation, the old access network device ignores the capability information corresponding to the work scenario, and uses the capability information as an invalid value. As the new access network device does not receive the second indication information, the new access network device does not parse the capability information based on the new mapping relationships. Therefore, both the old and new access network devices can correctly parse the capability information reported by the old UE to obtain the related capabilities of the old UE in the different work modes.

Certainly, when sending capability information corresponding to the 10 existing work scenarios, the new UE may send the capability information corresponding to the 10 existing work scenarios by using the new mapping relationships or the old mapping relationships. In addition, both the new and old access network devices can correctly parse the capability information that is sent by the new UE and corresponding to the 10 existing work scenarios.

603. The access network device determines related capabilities of the user equipment in different work scenarios based on preset mapping relationships and the capability information.

It can be learned that, in this embodiment of this application, if the UE has error implementation, the UE may use the second indication information to indicate to the access network device that the UE supports the new mapping relationships, so that the access network device can correctly parse the capability information reported by the UE to obtain the related capabilities of the UE in the different work scenarios.

If the UE has error implementation, and the access network device has a fault tolerance mechanism, refer to FIG. 7. FIG. 7 is a schematic flowchart of another user equipment capability transmission method according to an embodiment of this application. In this embodiment, content the same as that in the embodiments shown in FIG. 4, FIG. 5, and FIG. 6 is not repeated. The method includes but is not limited to the following steps.

701. An access network device sends first indication information to user equipment.

702. The user equipment sends second indication information to the access network device.

703. The user equipment sends capability information to the access network device.

704. The access network device determines related capabilities of the user equipment in different work scenarios based on preset mapping relationships and the capability information.

It can be learned that, if the UE has error implementation and the access network device has a fault tolerance mechanism, through signaling interaction between the UE and the access network device, an old access network device does not receive the capability information for the six work scenarios that is sent by new UE or old UE due to the error implementation, and a new access network device can determine whether the UE uses the new mapping relationships. Therefore, both the new and old access network devices can correctly parse capability information sent by any UE, and obtain related capabilities of the UE in the different work modes.

An existing XDD/FRX capability signaling structure is reused, and meanings are redefined for existing temporarily meaningless values to indicate new scenarios. For example, (0 0 1 1) is defined to indicate that FDD-FR1 and TDD-FR2 are supported, and (0 1 1 1) is defined to indicate that FDD-FR1 and FDD/TDD-FR2 are supported.

Considering that fault tolerance processing may have been implemented on the network, the network may still have valid interpretations on the existing temporarily meaningless values. If a new meaning is defined, a compatibility issue may occur. To resolve this problem, the solutions of the present invention may further include:

Optional step 1: When enquiring about capabilities, a new base station indicates whether new scenario indications are supported, where new UE may use new meanings based on the network indications, and old UE may ignore the network indications and uses old meanings.

Optional step 2: Because existing XDD/FRX capability signaling is reused, the new base station does not know whether the UE performs interpretation based on the new meanings or the old meanings, and the UE indicates, before or during capability reporting, whether the new scenarios are supported. For example, the UE adds information indicating whether the new scenarios are supported to a capability message. Alternatively, before the network enquires about the capabilities, the UE indicates, to the network device, whether the new scenarios are supported. Specifically, the UE may perform indication in an RRC message or a NAS message.

Either or both of the foregoing optional steps may be supported.
(1) If neither of the current UE and base station have error implementation, to be specific, the current UE does not report the six invalid values and the current base station does not interpret the six invalid values: There may be no optional steps 1 and 2; the old UE does not report the six invalid values, and the old and new base stations do not use the old interpretations; and the new UE reports the six invalid values, and the old base station does not interpret the six invalid values, whereas the new base station correctly interprets the six invalid values.
(2) If the current UE has error implementation but the current base station does not, to be specific, the current UE reports the six invalid values and uses the old interpretations but the current base station does not interpret the six invalid values: There may be only optional step 2; and the old base station does not interpret the six invalid values reported by the old or new UE, whereas the new base station interprets the six invalid values reported only by the new UE.
(3) If the current UE does not have error implementation but the current base station does, to be specific, the current UE reports the six invalid values and uses the old interpretations but the current base station does not interpret the six invalid values: There may be only optional step 1; the old UE does not report the six invalid values, and neither of the old and new base stations use the old interpretations; and the new UE reports the 6 invalid value only when being served by the new base station, and the old base station does not interpret the errors.
(4) If the current UE and the current base station both have error implementation, to be specific, the current UE reports the six invalid values and use the old interpretations and the current base station interprets the six invalid values: Optional steps 1 and 2 are required.

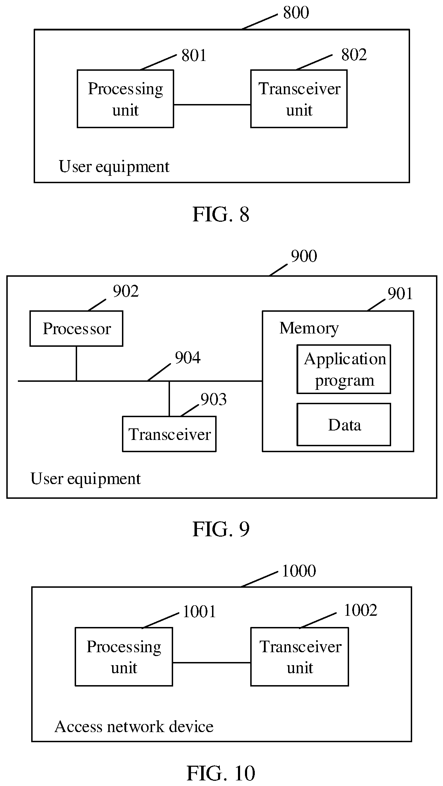

FIG. 8 is a schematic structural diagram of user equipment according to an embodiment of this application. User equipment 800 includes a processing unit 810 and a transceiver unit 820.

The processing unit 810 is configured to control the transceiver unit 820 to send capability information to an access network device, where the capability information is used to indicate capabilities of the user equipment in different work scenarios, and the work scenarios are obtained by combining frequency range 1 and frequency range 2 with frequency division duplex and time division duplex.

In a possible implementation, before the capability information is sent to the access network device, the processing unit 810 is further configured to control the transceiver unit 820 to receive first indication information sent by the access network device, where the first indication information is used to indicate that the user equipment is allowed to send the capability information.

In a possible implementation, the processing unit is further configured to control the transceiver unit to send second indication information to the access network device, where the second indication information is used to indicate that the user equipment supports using preset mapping relationships to indicate the capabilities of the user equipment in the different work scenarios.

In a possible implementation, the processing unit 810 is further configured to determine a capability corresponding to each work mode, and determine a value of each piece of capability information based on the preset mapping relationships and a work mode supported by each capability.

In a possible implementation, the capability information is further used to indicate that the user equipment supports using the preset mapping relationships to indicate related capabilities of the user equipment in the different work scenarios.

In a possible implementation, the preset mapping relationships are correspondences between values of capability information and work scenarios.

In a possible implementation, each work scenario includes at least two work modes, and the at least two work modes include at least one of the following cases:
a work mode of frequency division duplex-frequency range 2 and a work mode of time division duplex-frequency range 1;
a work mode of frequency division duplex-frequency range 1, a work mode of frequency division duplex-frequency range 2, and a work mode of time division duplex-frequency range 2;
a work mode of frequency division duplex-frequency range 2, a work mode of time division duplex-frequency range 1, and a work mode of time division duplex-frequency range 2;
a work mode of frequency division duplex-frequency range 1, a work mode of time division duplex-frequency range 1, and a work mode of time division duplex-frequency range 2; and
a work mode of frequency division duplex-frequency range 1, a work mode of frequency division duplex-frequency range 2, and a work mode of time division duplex-frequency range 1.

In a possible implementation, the processing unit 810 is further configured to control the transceiver unit to send second capability information to the access network device, where the second capability information is used to indicate capabilities of the user equipment in different work scenarios, and the work scenarios are obtained by combining no more than three of frequency range 1, frequency range 2, frequency division duplex, and time division duplex; and the second capability information includes the value of each piece of capability information, the value corresponding to each piece of capability information corresponds to a work mode, and the value of each piece of capability information meets a preset value assignment rule; and
in the preset mapping relationships, a value of capability information is an invalid value that does not meet the preset value assignment rule.

FIG. 9 is a schematic structural diagram of another user equipment according to an embodiment of this application. User equipment 900 includes a memory 901, a processor 902, and a transceiver 903, which are connected by using a bus 904. The memory 901 is configured to store related instructions and data, and may transmit the stored data to the processor 902.

The processor 902 is configured to read the related instructions in the memory 901 to perform the following operation:
sending capability information to an access network device, where the capability information is used to indicate capabilities of the user equipment in different work scenarios, and the work scenarios are obtained by combining frequency range 1 and frequency range 2 with frequency division duplex and time division duplex.

Specifically, the processor 902 may be the processing unit 801 of the user equipment 800 in the embodiment shown in FIG. 8, and the transceiver 903 of the user equipment 900 may be the transceiver unit 802 of the user equipment 800 in the embodiment shown in FIG. 8.

FIG. 10 is a schematic structural diagram of an access network device according to an embodiment of this application. An access network device 1000 includes a processing unit 1001 and a transceiver unit 1002;
the transceiver unit 1002 is configured to receive capability information sent by user equipment, where the capability information is used to indicate capabilities of the user equipment in different work scenarios, and the work scenarios are obtained by combining frequency range 1 and frequency range 2 with frequency division duplex and time division duplex; and
the processing unit 1001 is configured to determine related capabilities of the user equipment in the different work scenarios based on preset mapping relationships and the capability information.

In a possible implementation, before the receiving capability information sent by user equipment, the transceiver unit 1002 is further configured to send first indication information to the user equipment, where the first indication information is used to indicate that the user equipment is allowed to send the capability information.

In a possible implementation, before the determining related capabilities of the user equipment in the different work scenarios based on preset mapping relationships and the capability information, the transceiver unit 1002 is further configured to receive second indication information sent by the user equipment, where the second indication information is used to indicate that the user equipment supports using the preset mapping relationships to indicate the related capabilities of the user equipment in the different work scenarios.

In a possible implementation, the capability information is further used to indicate that the user equipment supports using the preset mapping relationships to indicate the related capabilities of the user equipment in the different work scenarios.

In a possible implementation, the preset mapping relationships are correspondences between values of capability information and work scenarios.

In a possible implementation, each work scenario includes at least two work modes, and the at least two work modes include at least one of the following cases:
a work mode of frequency division duplex-frequency range 2 and a work mode of time division duplex-frequency range 1;
a work mode of frequency division duplex-frequency range 1, a work mode of frequency division duplex-frequency range 2, and a work mode of time division duplex-frequency range 2;
a work mode of frequency division duplex-frequency range 2, a work mode of time division duplex-frequency range 1, and a work mode of time division duplex-frequency range 2;
a work mode of frequency division duplex-frequency range 1, a work mode of time division duplex-frequency range 1, and a work mode of time division duplex-frequency range 2; and
a work mode of frequency division duplex-frequency range 1, a work mode of frequency division duplex-frequency range 2, and a work mode of time division duplex-frequency range 1.

In a possible implementation, the transceiver unit 1002 is further configured to receive second capability information sent by the user equipment, where
the second capability information is used to indicate capabilities of the user equipment in different work scenarios, and the work scenarios are obtained by combining no more than three of frequency range 1, frequency range 2, frequency division duplex, and time division duplex; and the second capability information includes a value of each piece of capability information, the value corresponding to each piece of capability information corresponds to a work mode, and the value of each piece of capability information meets a preset value assignment rule; and
in the preset mapping relationships, a value of capability information is an invalid value that does not meet the preset value assignment rule.

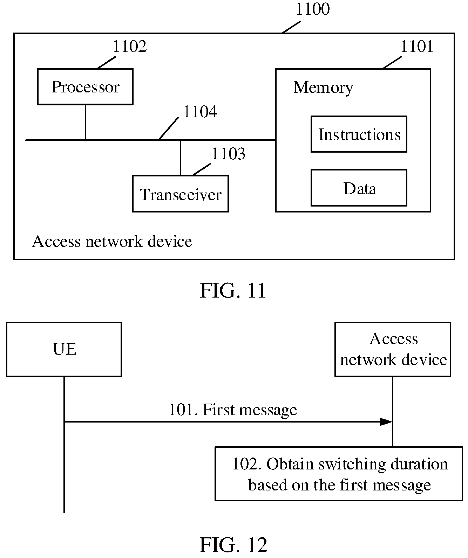

FIG. 11 is a schematic structural diagram of another an access network device according to an embodiment of this application. An access network device 1100 includes a memory 1101, a processor 1102, and a transceiver 1103, which are connected by using a bus 1104. The memory 1101 is configured to store related instructions and data, and may transmit the stored data to the processor 1102.

The processor 1102 is configured to read the related instructions in the memory 1101 to perform the following operation:
receiving capability information sent by user equipment, where the capability information is used to indicate capabilities of the user equipment in different work scenarios, and the work scenarios are obtained by combining frequency range 1 and frequency range 2 with frequency division duplex and time division duplex; and
determining related capabilities of the user equipment in the different work scenarios based on preset mapping relationships and the capability information.

The capability information is sent to the access network device, where the capability information is used to indicate the capabilities of the user equipment in the different work scenarios, and the work scenarios are obtained by combining frequency range 1 and frequency range 2 with frequency division duplex and time division duplex. Specifically, the processor 1102 may be the processing unit 1001 of access network device 1000 in the embodiment shown in FIG. 10, and the transceiver 1103 of the access network device 1100 may be the transceiver unit 1002 of the access network device 1000 in the embodiment shown in FIG. 8.

A scenario in which the UE is connected to two base stations with different radio access technologies (Radio Access Technology, RAT) may be referred to as multi-RAT dual connectivity (Multi-RAT Dual Connectivity, MR-DC). A scenario in which an E-UTRA base station serves as a master node (Master Node, MN) and an NR base station serves as a secondary node (Secondary Node, SN) is specifically referred to as E-UTRA-NR dual connectivity (E-UTRA-NR Dual Connectivity, EN-DC) in MR-DC. A scenario in which an NR base station serves as a master node and an E-UTRA base station serves as a secondary node is specifically referred to as NR-E-UTRA dual connectivity (NR-E-UTRA Dual Connectivity, NE-DC) in MR-DC.

In addition, because NR operates in a relatively high band and a transmit power of UE is relatively low, UE in a cell edge area can receive a signal of an NR base station but the NR base station cannot receive a signal of the UE. In other words, a problem of asymmetric uplink and downlink coverage exists. To resolve this problem, a low band (for example, an LTE band) is introduced to assist the UE in uplink transmission, and an uplink in the introduced low band is referred to as a supplementary uplink (Supplementary Uplink, SUL). To facilitate differentiation between two uplinks ULs, an original uplink with a relatively high band is referred to as a normal uplink (Normal Uplink, NUL).

In an EN-DC, NE-DC, NR carrier aggregation, or SUL scenario, UE may work on two or more uplink carriers at the same time. For example, in the EN-DC or NE-DC scenario, the UE may send data separately on an LTE uplink carrier and an NR uplink carrier; in the NR carrier aggregation scenario, the UE may send data separately on NR uplink carrier 1 and NR uplink carrier 2; and in the SUL scenario, the UE may send data separately on a SUL carrier and a NUL carrier.

When two or more uplink carriers are used to send data, the UE allocates one transmission port (Transmission port, TX port) 1 in internal radio frequency hardware to one of the uplink carriers to send the data, and allocates another/the other transmission port 2 in the internal radio frequency hardware to another/the other carrier uplink carrier to send the data. An idea of super uplink is: When no data is being sent on uplink carrier 1, a TX port used by uplink carrier 1 may be lent to uplink carrier 2 for data sending. In other words, the UE controls the TX port to switch between the two uplink carriers. In this case, the two TX ports may be used to send data on uplink carrier 2. It may be understood that, an amount of data sent by using the two TX ports is greater than that of data sent by using one TX port, thereby increasing a throughput for sending uplink data. In addition, due to implementation of the internal radio frequency hardware of the UE, when the UE controls the TX port to switch between the two uplink carriers, there may be specific switching duration, for example, 0 us, 35 us, or 140 us.

The current UE does not have a super uplink capability. Therefore, whether the UE supports the super uplink capability cannot be reported in a current UE capability information message, and consequently the UE cannot use the super uplink capability.

An antenna mentioned in this application may also be referred to as an antenna port or a radio frequency link. This application mainly focuses on a UE's uplink capability. Therefore, the antenna, the antenna port, and the radio frequency link may also be referred to as a transmit antenna, a transmit antenna port, and a transmit radio frequency link.

FIG. 12 is a schematic flowchart of an information transmission method according to an embodiment of this application. The method includes but is not limited to the following steps.

101. User equipment sends a first message to an access network device.

The first message includes switching duration, and the switching duration is duration in which an antenna of the user equipment is switched between a first uplink carrier and a second uplink carrier in a band combination of the user equipment. In a specific implementation process, the user equipment first traverses all bands in the band combination, determines a category of a carrier included in each band, and filters all bands that include an uplink carrier in the band combination. Then, the user equipment reports the duration for switching between the first uplink carrier and the second uplink carrier in all the uplink carriers. The first uplink carrier and the second uplink carrier are, for example, any two uplink carriers in all the uplink carriers. Alternatively, the first uplink carrier and the second uplink carrier may be a same uplink carrier in all the uplink carriers.

In a possible manner, the user equipment may further report a band combination that supports the super uplink capability, and for the band combination that supports the super uplink capability, filter all bands that include an uplink carrier in the band combination. For all band pairs each composed of any two bands in the bands that include an uplink carrier, the user equipment may report switching duration corresponding to each of all the band pairs, that is, duration of switching between a first uplink carrier corresponding to one band in a frequency band pair and a second uplink carrier corresponding to the other band in the band pair. Optionally, for another band that does not include an uplink carrier in the band combination, that is, a band with only a downlink carrier, the user equipment may not report switching duration related to the downlink carrier, for example, duration of switching between an uplink carrier and a downlink carrier or duration of switching between one and another downlink carriers. Alternatively, the user equipment may report the switching duration related to the downlink carrier. In this case, the user equipment traverses all the bands in the band combination, and reports duration of switching between any two bands in the band combination, or duration of switching between carriers corresponding to any two bands.

Certainly, in actual application, the user equipment does not need to determine and traverse all bands in the band combination, but directly reports all carriers in the band combination to the access network device by using the first message, and reports, to the access network device, duration in which the antenna is switched between any two carriers in the band combination. It should be noted that, if the any two carriers include only downlink carriers, the duration of the switching between the two carriers is a preset value. However, this switching duration is meaningless to uplink transmission performed by the UE.

If the duration of switching between any two carriers is directly reported, a large quantity of switching durations need to be reported. As a result, signaling overheads for reporting the switching durations are relatively large. However, many switching durations are useless for a user to use the super uplink capability, and waste of signaling resources is caused. Therefore, if a band that includes an uplink carrier in the band combination is first determined, and then only duration of switching between uplink carriers is reported, the waste of signaling resources can be avoided.

The first message may be a UE capability information message. That is, a field is added to an existing UE capability information message, and the new field indicates the switching duration.

In addition, the first message further includes a maximum quantity of multiple-input multiple-output (Multi Input Multi Output, MIMO) layers supported by the UE and/or a maximum quantity of channel sounding reference signal (Sounding Reference Signal, SRS) ports supported by the UE.

When UE that does not support the super uplink capability reports an antenna capability of each uplink carrier, a maximum quantity of MIMO layers and a maximum quantity of SRS ports included in the antenna capability correspond to a quantity of antennas usable by the uplink carrier. For example, if only one antenna can be used to send data on each uplink carrier, the maximum quantity of MIMO layers is equal to 1 or the maximum quantity of SRS ports is equal to 1. If a plurality of antennas can be used to send data on each uplink carrier, the maximum quantity of MIMO layers and the maximum quantity of SRS ports each are greater than 1.

For UE that supports the super uplink capability, if a quantity of antennas usable by an uplink carrier allowing for carrier switching increases, when an antenna capability of the uplink carrier is reported, a maximum quantity of MIMO layers and a maximum quantity of SRS ports included in the antenna capability each is greater than 1. Therefore, whether the UE supports the super uplink capability cannot be indicated by using only the maximum quantity of MIMO layers and the maximum quantity of SRS ports. However, for the UE that supports the super uplink capability, the maximum quantity of MIMO layers and the maximum quantity of SRS ports that are corresponding to the UE each is certainly greater than 1. Therefore, whether the UE supports the super uplink capability may be further determined based on values of the maximum quantity of MIMO layers and the maximum quantity of SRS ports.

It may be understood that, the switching duration indicates that the antenna of the UE may be switched between two carriers. Therefore, the switching duration may be further used to indicate that the UE supports the super uplink capability. In other words, if the UE capability information message reported by the UE carries switching duration, it indicates that the UE supports the super uplink capability.

If a case in which the antenna of the UE is switched on a same uplink carrier needs to be considered, the first uplink carrier and the second uplink carrier may be a same uplink carrier. Therefore, the reported switching duration includes switching duration of switching on a same carrier (this switching duration is generally 0) and duration of switching between different carriers; or
if a case in which the antenna of the UE is switched on a same uplink carrier does not need to be considered, the first uplink carrier and the second uplink carrier are different uplink carriers. Therefore, the reported switching duration does not include switching duration in which the user equipment performs antenna switching on a same carrier and includes only switching duration in which the user equipment performs antenna switching between different carriers.

Further, if a direction of switching between two uplink carriers needs to be considered, it is assumed that switching from the first uplink carrier to the second uplink carrier and switching from the second uplink carrier to the first uplink carrier correspond to two different switching durations. Therefore, the switching duration for switching between different carriers includes switching duration for the switching from the first uplink carrier to the second uplink carrier and switching duration for the switching from the second uplink carrier to the first uplink carrier. Further, if the direction of switching between two uplink carriers does not need to be considered, it is assumed that the switching from the first uplink carrier to the second uplink carrier and the switching from the second uplink carrier to the first uplink carrier correspond to one switching duration. In this case, the switching duration includes the switching duration for the switching from the first uplink carrier to the second uplink carrier.

For example, the band combination of the UE is (band 1, band 2, band 3, band 4), and band 1, band 3, and band 4 each include an uplink carrier and band 2 includes only a downlink carrier. When switching on a same uplink carrier and the direction of switching between two uplink carriers are considered, the reported switching duration includes duration of switching from band 1 to band 1, duration of switching from band 1 to band 3, duration of switching from band 1 to band 4, duration of switching from band 3 to band 1, duration of switching from band 3 to band 3, duration of switching from band 3 to band 4, duration of switching from band 4 to band 1, duration of switching from band 4 to band 3, and duration of switching from band 4 to band 4;
when switching on a same uplink carrier is not considered but the direction of switching between two uplink carriers is considered, the reported switching duration includes duration of switching from band 1 to band 3, duration of switching from band 1 to band 4, duration of switching from band 3 to band 1, duration of switching from band 3 to band 4. duration of switching from band 4 to band 1, and duration of switching from band 4 to band 3; or
when switching on a same uplink carrier and the direction of switching between two uplink carriers are not considered, the reported switching duration includes duration of switching from band 1 to band 3, duration of switching from band 1 to band 4, and duration of switching from band 3 to band 4.

102. The access network device obtains switching duration based on the first message.

The access network device determines, by using the switching duration, that the user equipment supports the super uplink capability.

It can be learned that, in this embodiment of this application, that the super uplink capability is supported may be indicated to the access network device by using the first message, and the super uplink capability supported by the user equipment may be reported to the access network device. In addition, when the switching duration is reported, only the switching duration in which the antenna of the user equipment is switched between uplink carriers is reported, so as to avoid reporting invalid switching duration, and reduce signaling overheads for reporting the switching duration.

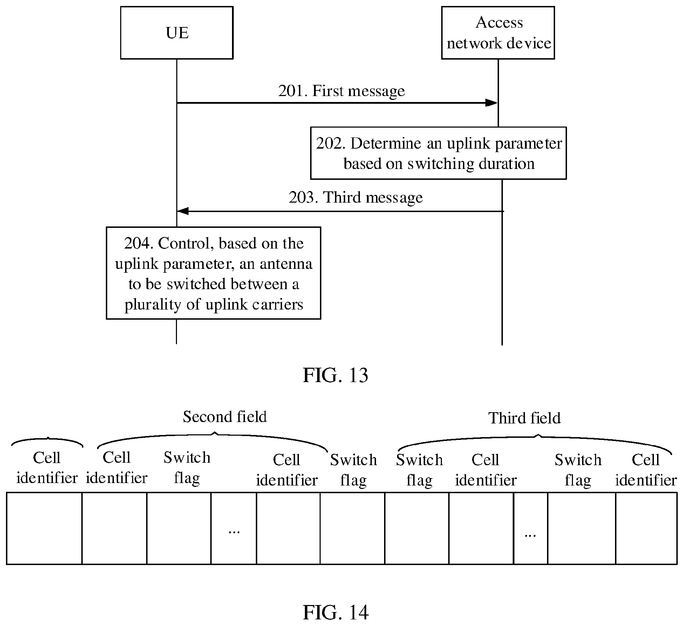

FIG. 13 is a schematic flowchart of another information transmission method according to an embodiment of this application. In this embodiment, a part the same as that in the embodiment shown in FIG. 1 is not repeated. The method in this embodiment includes the following steps.

201. User equipment sends a first message to an access network device.

The first message includes switching duration, and the switching duration is duration in which an antenna of the user equipment is switched between a first uplink carrier and a second uplink carrier in a band combination of the user equipment.

When the access network device determines that the UE supports a super uplink capability, for example, receives the switching duration sent by the UE, the access network device may configure an uplink parameter for the UE, so that the UE performs uplink transmission to the access network device based on the uplink parameter by using the super uplink capability. For example, the access network device may select two uplink carriers from uplink carriers allowing for switching that are reported by the UE, and send the two uplink carriers to the UE, so that the UE switches between the two uplink carriers to use the super uplink capability.

In addition, the UE may alternatively report a request message to the access network device. The request message is used to request to use the super uplink capability. After receiving the request message, the access network device may configure the uplink parameter for the UE.

203. The access network device sends a third message to the user equipment.

The third message includes an uplink parameter, and the uplink parameter is used to indicate to configure the user equipment to perform antenna switching between the two uplink carriers. In other words, it may be understood that, the uplink parameter is used to indicate that the user equipment is allowed to perform antenna switching between the two uplink carriers; or the uplink parameter is used to indicate to enable a function for the user equipment to perform antenna switching between the two uplink carriers.

204. The user equipment may perform antenna switching between two configured uplink carriers based on an uplink parameter.

The uplink parameter includes a first parameter and/or a second parameter.

The first parameter is used to indicate an uplink carrier to be interrupted when the antenna of the user equipment is switched between of the two uplink carriers. When the antenna of the UE is switched between two uplink carriers, data transmission on one uplink carrier needs to be interrupted. Therefore, the first parameter may be used to indicate the uplink carrier to be interrupted. Alternatively, the first parameter is used to indicate an uplink carrier for which an uplink transmission switching period is configured, or it may be understood that the first parameter is used to indicate that a corresponding uplink carrier is an uplink carrier for which an uplink transmission switching period is configured. In addition, the access network device knows the switching duration of the UE between the carriers. Therefore, after delivering the third message, the access network device may calculate an interruption time of the interrupted uplink carrier when scheduling uplink data transmission on the uplink carrier on which the carrier switching occurs. When the time reaches the switching duration, a process of communication with the interrupted uplink carrier is restored.

Optionally, the first parameter may be a 1-bit indicator field, and the 1-bit indicator field corresponds to a cell configuration or a cell identifier (or a carrier configuration or a carrier identifier). Whether a corresponding cell is the uplink carrier to be interrupted is indicated based on whether the 1-bit indicator field exists, or based on a value of the 1-bit indicator field. It should be noted that, in this case, one cell has only one uplink carrier, that is, the cell and the uplink carrier are in a one-to-one correspondence. For example, as described in Table 1, the antenna of the user equipment is switched between carrier 1 and carrier 2, carrier 1 corresponds to cell 1, and carrier 2 corresponds to cell 2. If the 1-bit indicator field exists in a configuration of cell 1 (or carrier 1), or if the value of the 1-bit indicator field is 1 in the configuration of cell 1 (or carrier 1), or if the value of the 1-bit indicator field is TRUE in the configuration of cell 1 (or carrier 1), it is considered that cell 1 (or carrier 1) is the carrier to be interrupted. In addition, if the 1-bit indicator field does not exist in a configuration of cell 2 (or carrier 2), or the value of the 1-bit indicator field is 0 in the configuration of cell 2 (or carrier 2), or the value of the 1-bit indicator field is FALSE in the configuration of cell 2 (or carrier 2), in this case, it indicates that the uplink carrier to be interrupted during the switching between carrier 1 and carrier 2 is carrier 1.

**Table 1:**

| Configuration of cell 1 (carrier 1) | Configuration of cell 2 (carrier 2) |
|---|---|
| The first parameter exists, is set to 1, or is set to TRUE. | The first parameter does not exist, is set to 0, or is set to FALSE. |

Optionally, the first parameter may further include a cell identifier. It should be noted that, in this case, one cell has only one uplink carrier, that is, the cell and the uplink carrier are in a one-to-one correspondence.

When the access network device configures only two uplink carriers for the UE, the UE can use only the two uplink carriers to send data. If antenna switching occurs, the user equipment is definitely switched between the two configured uplink carriers. Therefore, the access network device may include only the first parameter in the uplink parameter, and use the first parameter to indicate the uplink carrier to be interrupted when the user equipment performs antenna switching between the two uplink carriers. Further, the uplink parameter may further include a second parameter. The second parameter is used to indicate an uplink carrier on which the antenna switching is to occur and/ or a switching direction in which the user equipment performs antenna switching between the two uplink carriers. A manner in which the second parameter indicates the uplink carrier on which antenna switching is to occur and the switching direction is described in detail below, and no description is provided herein. The switching direction includes switching from a first uplink carrier in the two uplink carriers to a second uplink carrier, or switching from the second uplink carrier to the first uplink carrier.

When the access network device configures more than two uplink carriers for the UE, if antenna switching is to occur, the access network device needs to first indicate two uplink carriers on which the antenna switching is to be performed, and then indicates an uplink carrier to be interrupted when switching is performed between the two uplink carriers. Therefore, the uplink parameter needs to include the first parameter and the second parameter, and the second parameter is used to indicate the uplink carrier on which the switching is to occur. Specifically, the two uplink carriers on which the antenna switching is to occur are referred to as a pair of to-be-switched uplink carriers or a to-be-switched uplink carrier pair. When the access network device configures more than two uplink carriers for the UE, there may be one or more to-be-switched uplink carrier pairs.

Optionally, the second parameter may include a cell identifier or a carrier identifier, and the cell identifier or the carrier identifier indicates the uplink carrier on which the antenna switching is to occur.

Optionally, the manner in which the second parameter indicates the uplink carrier on which the antenna switching is to occur may be consistent with a manner in which the first parameter indicates the uplink carrier to be interrupted. To be specific, the second parameter may be a 1-bit indicator field, and the 1-bit indicator field corresponds to a cell configuration or a cell identifier (or a carrier configuration or a carrier identifier). Whether a corresponding cell is the uplink carrier for antenna switching is indicated based on whether the 1-bit indicator field exists, or based on a value of the 1-bit indicator field. It should be noted that, in this case, one cell has only one uplink carrier, that is, the cell and the uplink carrier are in a one-to-one correspondence.

In addition, the second parameter may be further used to indicate the switching direction in which the antenna is switched between the two carriers. The switching direction in which the antenna is switched between the two uplink carriers includes switching from a first uplink carrier in the two uplink carriers to a second uplink carrier, or switching from the second uplink carrier to the first uplink carrier.

Optionally, for indication of the switching direction, that an uplink carrier is an uplink carrier from which the antenna is switched or an uplink carrier to which the antenna is switched may be indicated by limiting a definition of the second parameter.

For example, if the second parameter is limited to indicating that an uplink carrier is the uplink carrier to which the antenna is switched, in this case, the second parameter corresponding to each cell not only indicates an uplink carrier on which switching is to occur, but may also indicate a specific cell with an antenna to be switched to the cell; or indicates that the antenna of the cell is to be switched to the cell corresponding to the second parameter. For example, as described in Table 2, a value of the second parameter of cell 1 is an identifier of cell 2. If the second parameter is defined as the uplink carrier from which the antenna is switched, in other words, carrier 2 is a carrier on which antenna switching is to occur and the antenna is to be switched from carrier 2 to carrier 1, the switching direction is from carrier 2 to carrier 1. If the second parameter is defined as the uplink carrier to which the antenna is switched, in other words, carrier 1 is a carrier on which antenna switching is to occur and the antenna is to be switched from carrier 1 to carrier 2, the switching direction is from carrier 1 to carrier 2.

**Table 2:**

| Configuration of cell 1 (carrier 1) | Configuration of cell 2 (carrier 2) | Configuration of cell 3 (carrier 3) |
|---|---|---|
| Second parameter: identifier of cell 2 | | |

Optionally, in addition to the cell identifier or the carrier identifier, the second parameter includes a switch flag, and the switch flag is used to indicate that an uplink carrier is the uplink carrier from which the antenna is switched or the uplink carrier to which the antenna is switched.

It should be understood that, if the switching direction is switching from the first uplink carrier to the second uplink carrier, the first uplink carrier is the uplink carrier from which the antenna is switched, and the second uplink carrier is the uplink carrier to which the antenna is switched.

Specifically, when the access network device configures more than two uplink carriers for the UE, for example, the access network device configures three uplink carriers for the UE, namely, carrier 1, carrier 2, and carrier 3. Carrier 1 corresponds to cell 1, carrier 2 corresponds to cell 2. and carrier 3 corresponds to cell 3. If the access network device indicates to switch the antenna of the UE between two uplink carriers, the second parameter may be used to indicate the two uplink carriers on which the antenna switching is to occur.

For example, if the antenna switching is to occur between carrier 1 and carrier 2, the configuration of carrier 1 includes the second parameter or a value of the second parameter. As described in Table 2, if the value of the second parameter is configured as the identifier of cell 2, the value of the second parameter may directly indicate that the antenna of the user equipment is switched between carrier 1 and carrier 2. In this case, the second parameter in the configuration of cell 2 may be further set to an identifier of cell 1. If the second parameter of each cell only indicates that a carrier corresponding to the cell is a carrier on which antenna switching is to occur, as described in Table 3, the second parameter or a value of the second parameter may be included in the configuration of carrier 1 and may also be included in the configuration of carrier 2, to indicate that the UE is to switch between carrier 1 and carrier 2.

**Table 3:**

| Configuration of cell 1 (carrier 1) | Configuration of cell 2 (carrier 2) | Configuration of cell 3 (carrier 3) |
|---|---|---|
| Second parameter or the value of the second parameter | Second parameter or the value of the second parameter | |

It is assumed that a direction of switching between the two uplink carriers may be further indicated by using the second parameter. As described in Table 2, if the second parameter is defined as an uplink carrier from which the antenna is switched, the second parameter of the first carrier may be set to the cell identifier of carrier 2, so as to indicate that the antenna of the UE is switched from carrier 2 to carrier 1.

Further, it is assumed that a switch flag is used to indicate that an uplink carrier is the uplink carrier from which the antenna is switched or the uplink carrier to which the antenna is switched. For example, as described in Table 4, if the switch flag exists in the configuration of cell 1 (or carrier 1), it indicates that carrier 1 is the uplink carrier from which the antenna is switched or the uplink carrier to which the antenna is switched. Alternatively, a value or a definition of the switch flag may be used to specifically indicate "the uplink carrier from which the antenna is switched" or "the uplink carrier to which the antenna is switched". For example, a value of 1 indicates the uplink carrier to which the antenna is switched, and a value of 0 indicates the uplink carrier from which the antenna is switched. If the switch flag in the configuration of cell 1 (or carrier 1) indicates "the uplink carrier from which the antenna is switched", it indicates that carrier 1 is the uplink carrier from which the antenna is switched.

Optionally, the switch flag may also be included in the configuration of cell 2 (or carrier 2), and a manner of setting the switch flag is similar to that of cell 1.

**Table 4:**

| Configuration of cell 1 (carrier 1) | Configuration of cell 2 (carrier 2) | Configuration of cell 3 (carrier 3) |
|---|---|---|
| Second parameter: identifier of cell 2 + switch flag | | |

When the access network device configures three uplink carriers for the UE, namely, carrier 1, carrier 2, and carrier 3, it is assumed that the antenna of the user equipment can be switched between a plurality of uplink carriers, for example, the UE can perform antenna switching between carrier 1 and carrier 2, and can also perform antenna switching between carrier 1 and carrier 3.

As described in Table 5, the antenna of the user equipment is switched between carrier 1 and carrier 2, and can also be switched between carrier 1 and carrier 3. Carrier 1 corresponds to cell 1, carrier 2 corresponds to cell 2, and carrier 3 corresponds to cell 3. Therefore, the second parameter may be included in the configuration of cell 1 (or carrier 1). The second parameter is set as an identifier of cell 2 corresponding to carrier 2 and an identifier of cell 3 corresponding to carrier 3. In this case, the UE performs antenna switching between carrier 1 and carrier 2, and can also perform antenna switching between carrier 1 and carrier 3.

Optionally, the second parameter may also be included in the configuration of cell 2 (or carrier 2) and the configuration of cell 3 (or carrier 3). The second parameter of cell 2 may be an identifier of cell 1 and/or the identifier of cell 3. The second parameter of cell 3 may be the identifier of cell 1 and/or the identifier of cell 2.

It is assumed that, whether an uplink carrier is the uplink carrier from which the antenna is switched or the uplink carrier to which the antenna is switched is limited by using the definition of the second parameter. For example, as described in Table 5, the second parameter is limited to indicating that an uplink carrier is the uplink carrier from which the antenna is switched. In this case, the second parameter may indicate that the antenna is switched between carrier 1 and carrier 2, and can also be switched between carrier 1 and carrier 3. In addition, the second parameter may indicate that carrier 2 and carrier 3 are the uplink carriers from which the antenna is switched, in other words, the switching direction is switching from carrier 2 to carrier 1, and switching from carrier 3 to carrier 1.

**Table 5**

| Configuration of cell 1 (carrier 1) | Configuration of cell 2 (carrier 2) | Configuration of cell 3 (carrier 3) |
|---|---|---|
| Second parameter: identifier of cell 2 + identifier of cell 3 | | |

Optionally, if the second parameter is not used to indicate the switching direction, the uplink parameter further includes a third parameter, and the third parameter is used to indicate the direction in which the UE is switched between the two uplink carriers. A manner in which the third parameter indicates the switching direction may be similar to a manner in which the second parameter indicates the switching direction, and no details are described again. For example, an indication corresponding to the switch flag may be separately set in a configuration of each cell, and the indicator field is set as the third parameter, so that the indication is provided based on whether the third parameter exists or based on a specific value of the third parameter.

In addition, a new message mechanism may be further used to indicate an uplink carrier and a switching direction.

For example, as shown in FIG. 14, a first field in the third message is specified as a related field of the uplink carrier to be interrupted. Then, the carrier to be interrupted during the switching is indicated by writing a cell identifier to this field. Assuming that the cell identifier is cell 1, it is determined that the uplink carrier to be interrupted is an uplink carrier corresponding to cell 1 in the band combination of the UE.

A second field in the third message is specified as a related field indicating the plurality of uplink carriers. The plurality of uplink carriers are indicated by writing cell identifiers to the related field. If the second parameter is further used to indicate the switching direction, a bit corresponding to the switch flag may be added after each cell identifier. When this bit is set to 0, it indicates that an uplink carrier corresponding to the cell identifier is an uplink carrier on which the switching originates. When this bit is set to 1, it indicates that the uplink carrier corresponding to the cell identifier is an uplink carrier that is to accept the switching. When the second parameter does not indicate the carrier switching direction, a third field in the third message is specified as a related field for indicating the switching direction, and the switching direction for switching between the plurality of uplink carriers is indicated by writing cell identifiers and switch flags corresponding to the cell identifiers to the related field.

It should be noted that the foregoing manner of indicating the uplink carrier and the switching direction is merely an example. A specific implementation is not limited in this application.

In addition, when the UE is currently located in the EN-DC scenario or the NE-DC scenario, the uplink carrier to be interrupted is an NR carrier by default. When the UE is currently located in the SUL scenario (the band combination of the UE includes a SUL carrier), because a cell identifier can indicate only a cell type corresponding to each carrier (indicate a cell corresponding to the SUL) while the cell includes two uplink carriers: the SUL carrier and a NUL carrier, the SUL carrier and the NUL carrier correspond to the same cell identifier. Therefore, the first parameter is further used to indicate a carrier type of the uplink carrier to be interrupted, and the carrier type includes a SUL carrier or a NUL carrier, that is, it indicates that the uplink carrier to be interrupted is a SUL carrier or a NUL carrier. Similarly, if two uplink carriers on which switching is to occur are also uplink carriers in the SUL scenario, the second parameter is further used to indicate a carrier type of each of the two uplink carriers, and the carrier type includes a SUL carrier or a NUL carrier, that is, it indicates that the uplink carrier is a SUL carrier or a NUL carrier.

Specifically, the first parameter includes a first field and a second field, where the first field may include a cell identifier, and the second field is used to indicate a carrier type of an uplink carrier. The second parameter includes a third field and a fourth field, where the third field may include a cell identifier, and the fourth field is used to indicate a carrier type of an uplink carrier.

For example, a 1-bit carrier type identifier may be added after a field corresponding to each cell identifier. It is assumed that when the bit is set to a first value, an uplink carrier corresponding to the cell identifier is identified as a SUL carrier; or when the bit is set to a second value, the uplink carrier corresponding to the cell identifier is a NUL carrier.

It can be learned that, in this implementation of this application, the super uplink capability of the UE may be reported to the access network device by using the first message, so that the super uplink capability is reported to the access network device. In addition, by configuring an uplink parameter, the access network device indicates the UE to use the super uplink capability. For an uplink carrier that is to accept antenna switching, an antenna capability obtained by switching may be added with an original antenna capability to enhance an antenna capability of the uplink carrier, thereby increasing an uplink transmission speed.

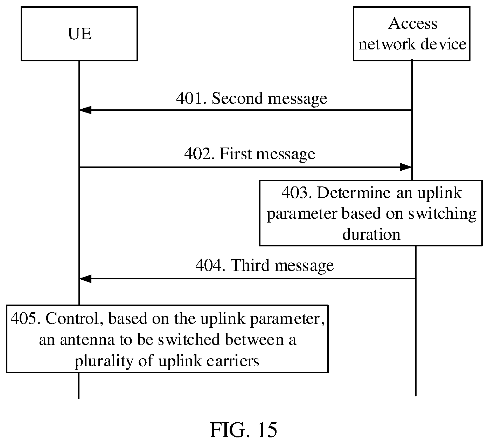

FIG. 15 is a schematic flowchart of another information transmission method according to an embodiment of this application.

401. An access network device sends a second message to user equipment.

The second message is used to indicate that the access network device allows the user equipment to send switching duration, that is, the access network device allows the UE to report a super uplink capability. Therefore, after receiving the second message, new UE reports its super uplink capability to the access network device. If the new UE does not receive the second message, the new UE does not report the super uplink capability to the access network device. This avoids a case in which the access network device does not support use of the super uplink capability by the UE but the new UE unnecessarily sends the super uplink capability to the access network device.

A first message may include a capability of a maximum quantity of multiple-input multiple-output (Multi Input Multi Output, MIMO) layers supported by the UE and/or a capability of a maximum quantity of channel sounding reference signal (Sounding Reference Signal, SRS) ports supported by the UE. When old UE that does not support the super uplink capability reports an antenna capability of each uplink carrier, a maximum quantity of MIMO layers and a maximum quantity of SRS ports included in the antenna capability correspond to a quantity of antennas usable by the uplink carrier. For example, if only one antenna can be used to send data on each uplink carrier, the maximum quantity of MIMO layers is equal to 1 or the maximum quantity of SRS ports is equal to 1. For new UE that supports the super uplink capability, an antenna of another uplink carrier may be borrowed for use on the uplink carrier, so that a quantity of antennas on the uplink carrier changes from one to two, that is, two antennas may be used to send data on the uplink carrier. In this case, the maximum quantity of MIMO layers is equal to 2 or the maximum quantity of SRS ports is equal to 2. If the new UE is served by an old access network device, the new UE may report a capability of a maximum quantity of MIMO layers or a capability of a maximum quantity of SRS ports that are achieved after a super uplink function is used. However, because the old access network device does not implement the super uplink function, after the new UE reports the quantity of antennas that is reached after the super uplink capability is used, the old access network device does not know that the capability reported by the new UE is not a quantity of antennas actually usable by the uplink carrier but is a quantity of antennas that is reached by using the super uplink function. This may cause an error when the access network device subsequently configures the UE to perform data transmission.

If the second message is introduced, because the old access network device does not send the second message, the new UE does not report the corresponding super uplink capability, that is, the reported capability of the maximum quantity of MIMO layers or the reported capability of the maximum quantity of SRS ports is the quantity of antennas actually usable by the uplink carrier. This avoids a possible configuration error or scheduling error of the access network device, that is, avoids a compatibility problem between the new UE and the old access network device.

When receiving the second message, the old UE automatically ignores the second message, and does not report the super uplink capability.

The new UE is UE with the super uplink capability, and the old UE is UE without the super uplink capability.

402. The user equipment sends a first message to the access network device.

The first message includes switching duration, and the switching duration is duration in which an antenna of the user equipment is switched between a first uplink carrier and a second uplink carrier in a band combination of the user equipment.

403. The access network device determines an uplink parameter based on the switching duration.

404. The access network device sends a third parameter to the user equipment.

405. The user equipment controls, based on the third parameter, an antenna to switch between two or more uplink carriers.

It can be learned that, in this implementation of this application, the super uplink capability of the UE may be reported to the access network device by using the first message, so that the super uplink capability is reported to the access network device. Moreover, the second message is used to indicate whether the access network device supports the super uplink function, thereby avoiding a compatibility problem between the new UE and the old access network device. In addition, by configuring an uplink parameter, the access network device indicates the UE to use the super uplink capability. For an uplink carrier that is to accept antenna switching, an antenna capability obtained by switching may be added with an original antenna capability to enhance an antenna capability of the uplink carrier, thereby increasing an uplink transmission speed.

An embodiment of this application further provides a computer readable storage medium. The computer readable storage medium stores a computer program. When the program is executed by a processor, a procedure related to the user equipment in the user equipment capability transmission method provided in the foregoing method embodiments may be implemented.

An embodiment of this application further provides a computer readable storage medium. The computer readable storage medium stores a computer program. When the program is executed by a processor, a procedure related to an access network device in the user equipment capability transmission method provided in the foregoing method embodiments may be implemented.

An embodiment of this application further provides a computer program product. When the computer program product runs on a computer or a processor, the computer or the processor is enabled to perform one or more steps in any one of the foregoing user equipment capability transmission methods. If each component module of the foregoing device is implemented in a form of a software functional unit and is sold or used as an independent product, the component modules of the foregoing device may be stored in the computer readable storage medium.

It should be understood that, the processor mentioned in the embodiments of this application may be a central processing unit (Central Processing Unit, CPU), the processor may further be another general purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general purpose processor may be a microprocessor, or the processor may be any conventional processor or the like.

It may be further understood that the memory mentioned in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or transistor logic device, or a discrete hardware assembly, the memory (storage module) is integrated into the processor.

It should be noted that the memory described in this specification includes but is not limited to these and any memory of another proper type.

It should be further understood that "first", "second", "third", "fourth", and various numerical sequence numbers are for distinguishing only for ease of description, and are not used to limit a scope of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in the embodiments of this application may be adjusted, combined, or removed based on an actual requirement.

The modules in the apparatus in the embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A user equipment capability transmission method, applied to a user equipment (100) or a chip installed in the user equipment (100) and comprising:
sending (402) a first message to an access network device (200) including a band combination and a switching duration, wherein the band combination supports that a first antenna of the user equipment (100) is switched between a first uplink carrier and a second uplink carrier, and the switching duration is duration in which the first antenna of the user equipment (100) is switched between the first uplink carrier and the second uplink carrier;
receiving (404) a third message, wherein the third message comprises an uplink parameter, and the uplink parameter indicates to configure the first antenna of the user equipment (100) to switch from the first uplink carrier to the second uplink carrier; and wherein the uplink parameter comprises a first parameter, and the first parameter indicates an uplink carrier to be interrupted when the first antenna is switched between the first uplink carrier and the second uplink carrier,
**characterized in that**
when the band combination includes a supplementary uplink carrier, the first parameter further indicates a carrier type corresponding to the uplink carrier to be interrupted.

2. The method according to claim 1, wherein the first parameter is a 1-bit indicator field, and the first parameter corresponds to a carrier configuration;
if the first parameter corresponding to the first uplink carrier configuration is set to TRUE, and the first parameter corresponding to the second uplink carrier configuration is set to FALSE, the first uplink carrier is the uplink carrier to be interrupted when the first antenna is switched between the first uplink carrier and the second uplink carrier.

3. The method according to claim 1 or 2, before sending the first message, further comprising:
receiving (401) a second message from the access network device (200), where the second message indicates that the user equipment (100) is allowed to send the switching duration.

4. The method according to any one of claims 1 to 3. wherein the first uplink carrier and the second uplink carrier are different uplink carriers.

5. The method according to any one of claims 1 to 3, wherein the first antenna is switched from the first uplink carrier to the second uplink carrier for data sending.

6. The method according to any one of claims 1 to 5, further comprising:
interrupting the uplink carrier indicated in the first parameter; and
switching the first antenna from the first uplink carrier to the second uplink carrier.

7. A user equipment capability transmission method, applied to an access network device (200) or a chip installed in the access network device and comprising:
receiving (402) from a user equipment (100) a band combination and a switching duration, wherein the band combination supports that a first antenna of the user equipment (100) is switched between a first uplink carrier and a second uplink carrier, and the switching duration is duration in which the first antenna of the user equipment (100) is switched between the first uplink carrier and the second uplink carrier;
sending (404) a third message to the user equipment (100), wherein the third message comprises an uplink parameter, and the uplink parameter indicates to configure the first antenna of the user equipment (100) to switch from the first uplink carrier to the second uplink carrier; and wherein the uplink parameter comprises a first parameter, and the first parameter indicates an uplink carrier to be interrupted when the first antenna is switched between the first uplink carrier and the second uplink carrier,
**characterized in that**
when the band combination includes a supplementary uplink carrier, the first parameter further indicates a carrier type corresponding to the uplink carrier to be interrupted.

8. The method according to claim 7, wherein the first parameter is a 1-bit indicator field, and the first parameter corresponds to a carrier configuration;
if the first parameter corresponding to the first uplink carrier configuration is set to TRUE, and the first parameter corresponding to the second uplink carrier configuration is set to FALSE, the first uplink carrier is the uplink carrier to be interrupted when the first antenna is switched between the first uplink carrier and the second uplink carrier.

9. The method according to claim 7 or 8, before receiving the band combination and the switching duration, further comprising:
sending (401) a second message to the user equipment (100), where the second message indicates that the user equipment (100) is allowed to send the switching duration.

10. The method according to any one of claims 7 to 9, wherein the first uplink carrier and the second uplink carrier are different uplink carriers.

11. The method according to any one of claims 7 to 10, wherein the first antenna is switched from the first uplink carrier to the second uplink carrier for data sending.

12. A user equipment which is configured to carry out the method of any one of claims 1 to 6.

13. An access network device which is configured to carry out the method of any one of claims 7 to 11.

14. A computer readable storage medium, wherein the computer readable storage medium is configured to store executable program code, and when executed by a device, the program code is used to implement the method according to any one of claims 1 to 6, or the method according to any one of claims 7 to 11.

15. A computer program product, when the computer program product runs on a computer, the computer is enabled to perform the method of any one of claims 1 to 6, or the method of any one of claims 7 to 11.

## Patentansprüche

1. Verfahren zur Übertragung der Fähigkeiten eines Benutzergeräts, das auf ein Benutzergerät (100) oder einen Chip, der in dem Benutzergerät (100) installiert ist, angewandt wird und Folgendes umfasst:
Senden (402) einer ersten Nachricht an eine Zugriffsnetzvorrichtung (200), die eine Bandkombination und eine Umschaltdauer beinhaltet, wobei die Bandkombination unterstützt, dass eine erste Antenne des Benutzergeräts (100) zwischen einem ersten Uplink-Träger und einem zweiten Uplink-Träger umgeschaltet wird, und die Umschaltdauer eine Dauer ist, in der die erste Antenne des Benutzergeräts (100) zwischen dem ersten Uplink-Träger und dem zweiten Uplink-Träger umgeschaltet wird;
Empfangen (404) einer dritten Nachricht, wobei die dritte Nachricht einen Uplink-Parameter umfasst und der Uplink-Parameter angibt, die erste Antenne des Benutzergeräts (100) dazu zu konfigurieren, von dem ersten Uplink-Träger zu dem zweiten Uplink-Träger umzuschalten; und wobei der Uplink-Parameter einen ersten Parameter umfasst und der erste Parameter einen Uplink-Träger angibt, der zu unterbrechen ist, wenn die erste Antenne zwischen dem ersten Uplink-Träger und dem zweiten Uplink-Träger umgeschaltet wird,
**dadurch gekennzeichnet, dass**
der erste Parameter ferner eine Trägerart angibt, die dem Uplink-Träger entspricht, der zu unterbrechen ist, wenn die Bandkombination einen ergänzenden Uplink-Träger beinhaltet.

2. Verfahren nach Anspruch 1, wobei der erste Parameter ein 1-Bit-Indikatorfeld ist und der erste Parameter einer Trägerkonfiguration entspricht;
wenn der erste Parameter, welcher der ersten Uplink-Trägerkonfiguration entspricht, auf TRUE eingestellt ist und der erste Parameter, welcher der zweiten Uplink-Trägerkonfiguration entspricht, auf FALSE eingestellt ist, der erste Uplink-Träger der Uplink-Träger ist, der zu unterbrechen ist, wenn die erste Antenne zwischen dem ersten Uplink-Träger und dem zweiten Uplink-Träger umgeschaltet wird.

3. Verfahren nach Anspruch 1 oder 2, vor dem Senden der ersten Nachricht ferner umfassend:
Empfangen (401) einer zweiten Nachricht von der Zugriffsnetzvorrichtung (200), wobei die zweite Nachricht angibt, dass es dem Benutzergerät (100) erlaubt ist, die Umschaltdauer zu senden.

4. Verfahren nach einem der Ansprüche 1 bis 3, wobei der erste Uplink-Träger und der zweite Uplink-Träger unterschiedliche Uplink-Träger sind.

5. Verfahren nach einem der Ansprüche 1 bis 3, wobei die erste Antenne von dem ersten Uplink-Träger zu dem zweiten Uplink-Träger zum Senden von Daten umgeschaltet wird.

6. Verfahren nach einem der Ansprüche 1 bis 5, ferner umfassend:
Unterbrechen des Uplink-Trägers, der in dem ersten Parameter angegeben wird; und
Umschalten der ersten Antenne von dem ersten Uplink-Träger zu dem zweiten Uplink-Träger.

7. Verfahren zur Übertragung der Fähigkeiten eines Benutzergeräts, das auf eine Zugriffsnetzvorrichtung (200) oder einen Chip, der in der Zugriffsnetzvorrichtung installiert ist, angewandt wird und Folgendes umfasst:
Empfangen (402), von einem Benutzergerät (100), einer Bandkombination und einer Umschaltdauer, wobei die Bandkombination unterstützt, dass eine erste Antenne des Benutzergeräts (100) zwischen einem ersten Uplink-Träger und einem zweiten Uplink-Träger umgeschaltet wird, und die Umschaltdauer eine Dauer ist, in der die erste Antenne des Benutzergeräts (100) zwischen dem ersten Uplink-Träger und dem zweiten Uplink-Träger umgeschaltet wird;
Senden (404) einer dritten Nachricht an das Benutzergerät (100), wobei die dritte Nachricht einen Uplink-Parameter umfasst und der Uplink-Parameter angibt, die erste Antenne des Benutzergeräts (100) dazu zu konfigurieren, von dem ersten Uplink-Träger zu dem zweiten Uplink-Träger umzuschalten; und
wobei der Uplink-Parameter einen ersten Parameter umfasst und der erste Parameter einen Uplink-Träger angibt, der zu unterbrechen ist, wenn die erste Antenne zwischen dem ersten Uplink-Träger und dem zweiten Uplink-Träger umgeschaltet wird, **dadurch gekennzeichnet, dass**
der erste Parameter ferner eine Trägerart angibt, die dem Uplink-Träger entspricht, der zu unterbrechen ist, wenn die Bandkombination einen ergänzenden Uplink-Träger beinhaltet.

8. Verfahren nach Anspruch 7, wobei der erste Parameter ein 1-Bit-Indikatorfeld ist und der erste Parameter einer Trägerkonfiguration entspricht;
wenn der erste Parameter, welcher der ersten Uplink-Trägerkonfiguration entspricht, auf TRUE eingestellt ist und der erste Parameter, welcher der zweiten Uplink-Trägerkonfiguration entspricht, auf FALSE eingestellt ist, der erste Uplink-Träger der Uplink-Träger ist, der zu unterbrechen ist, wenn die erste Antenne zwischen dem ersten Uplink-Träger und dem zweiten Uplink-Träger umgeschaltet wird.

9. Verfahren nach Anspruch 7 oder 8, vor dem Empfangen der Bandkombination und der Umschaltdauer ferner umfassend:
Senden (401) einer zweiten Nachricht an das Benutzergerät (100), wobei die zweite Nachricht angibt, dass es dem Benutzergerät (100) erlaubt ist, die Umschaltdauer zu senden.

10. Verfahren nach einem der Ansprüche 7 bis 9, wobei der erste Uplink-Träger und der zweite Uplink-Träger unterschiedliche Uplink-Träger sind.

11. Verfahren nach einem der Ansprüche 7 bis 10, wobei die erste Antenne von dem ersten Uplink-Träger zu dem zweiten Uplink-Träger zum Senden von Daten umgeschaltet wird.

12. Benutzergerät, das dazu konfiguriert ist, das Verfahren nach einem der Ansprüche 1 bis 6 auszuführen.

13. Zugriffsnetzvorrichtung, die dazu konfiguriert ist, das Verfahren nach einem der Ansprüche 7 bis 11 auszuführen.

14. Computerlesbares Speichermedium, wobei das computerlesbare Speichermedium dazu konfiguriert ist, einen ausführbaren Programmcode zu speichern, und, wenn er durch eine Vorrichtung ausgeführt wird, der Programmcode dazu verwendet wird, das Verfahren nach einem der Ansprüche 1 bis 6 oder das Verfahren nach einem der Ansprüche 7 bis 11 umzusetzen.

15. Computerprogrammprodukt, wobei, wenn das Computerprogrammprodukt auf einem Computer läuft, es dem Computer ermöglicht wird, das Verfahren nach einem der Ansprüche 1 bis 6 oder das Verfahren nach einem der Ansprüche 7 bis 11 durchzuführen.

## Revendications

1. Procédé de transmission de capacité d'équipement utilisateur, appliqué à un équipement utilisateur (100) ou à une puce installée dans l'équipement utilisateur (100) et comprenant :
l'envoi (402) d'un premier message à un dispositif de réseau d'accès (200) comportant une combinaison de bandes et une durée de commutation, dans lequel la combinaison de bandes prend en charge le fait qu'une première antenne de l'équipement utilisateur (100) est commutée entre une première porteuse de liaison montante et une seconde porteuse de liaison montante, et la durée de commutation est la durée pendant laquelle la première antenne de l'équipement utilisateur (100) est commutée entre la première porteuse de liaison montante et la seconde porteuse de liaison montante ;
la réception (404) d'un troisième message, dans lequel le troisième message comprend un paramètre de liaison montante, et le paramètre de liaison montante indique de configurer la première antenne de l'équipement utilisateur (100) pour passer de la première porteuse de liaison montante à la seconde porteuse de liaison montante ; et dans lequel le paramètre de liaison montante comprend un premier paramètre, et le premier paramètre indique une porteuse de liaison montante à interrompre lorsque la première antenne est commutée entre la première porteuse de liaison montante et la seconde porteuse de liaison montante,
**caractérisé en ce que**
lorsque la combinaison de bandes comporte une porteuse de liaison montante supplémentaire, le premier paramètre indique également un type de porteuse correspondant à la porteuse de liaison montante à interrompre.

2. Procédé selon la revendication 1, dans lequel le premier paramètre est un champ indicateur à 1 bit, et le premier paramètre correspond à une configuration de porteuse ;
si le premier paramètre correspondant à la première configuration de porteuse de liaison montante est défini sur VRAI, et le premier paramètre correspondant à la seconde configuration de porteuse de liaison montante est défini sur FAUX, la première porteuse de liaison montante est la porteuse de liaison montante à interrompre lorsque la première antenne est commutée entre la première porteuse de liaison montante et la seconde porteuse de liaison montante.

3. Procédé selon la revendication 1 ou 2, avant l'envoi du premier message, comprenant également :
la réception (401) d'un deuxième message provenant du dispositif de réseau d'accès (200), où le deuxième message indique que l'équipement utilisateur (100) est autorisé à envoyer la durée de commutation.

4. Procédé selon l'une quelconque des revendications 1 à 3, dans lequel la première porteuse de liaison montante et la seconde porteuse de liaison montante sont des porteuses de liaison montante différentes.

5. Procédé selon l'une quelconque des revendications 1 à 3, dans lequel la première antenne est commutée de la première porteuse de liaison montante à la seconde porteuse de liaison montante pour l'envoi de données.

6. Procede selon l'une quelconque des revendications 1 à 5, comprenant également :
l'interruption de la porteuse de liaison montante indiquée dans le premier paramètre ; et
la commutation de la première antenne de la première porteuse de liaison montante à la seconde porteuse de liaison montante.

7. Procédé de transmission de capacité d'équipement utilisateur, appliqué à un dispositif de réseau d'accès (200) ou à une puce installée dans le dispositif de réseau d'accès et comprenant :
la réception (402) à partir d'un équipement utilisateur (100) d'une combinaison de bandes et d'une durée de commutation, dans lequel la combinaison de bandes prend en charge le fait qu'une première antenne de l'équipement utilisateur (100) est commutée entre une première porteuse de liaison montante et une seconde porteuse de liaison montante, et la durée de commutation est la durée pendant laquelle la première antenne de l'équipement utilisateur (100) est commutée entre la première porteuse de liaison montante et la seconde porteuse de liaison montante ;
l'envoi (404) d'un troisième message à l'équipement utilisateur (100), dans lequel le troisième message comprend un paramètre de liaison montante, et le paramètre de liaison montante indique de configurer la première antenne de l'équipement utilisateur (100) pour passer de la première porteuse de liaison montante à la seconde porteuse de liaison montante ; et dans lequel le paramètre de liaison montante comprend un premier paramètre, et le premier paramètre indique une porteuse de liaison montante à interrompre lorsque la première antenne est commutée entre la première porteuse de liaison montante et la seconde porteuse de liaison montante,
**caractérisé en ce que**
lorsque la combinaison de bandes comporte une porteuse de liaison montante supplémentaire, le premier paramètre indique également un type de porteuse correspondant à la porteuse de liaison montante à interrompre.

8. Procédé selon la revendication 7, dans lequel le premier paramètre est un champ indicateur à 1 bit, et le premier paramètre correspond à une configuration de porteuse ;
si le premier paramètre correspondant à la première configuration de porteuse de liaison montante est défini sur VRAI, et le premier paramètre correspondant à la seconde configuration de porteuse de liaison montante est défini sur FAUX, la première porteuse de liaison montante est la porteuse de liaison montante à interrompre lorsque la première antenne est commutée entre la première porteuse de liaison montante et la seconde porteuse de liaison montante.

9. Procédé selon la revendication 7 ou 8, avant la réception de la combinaison de bandes et de la durée de commutation, comprenant également :
l'envoi (401) d'un deuxième message à l'équipement utilisateur (100), où le deuxième message indique que l'équipement utilisateur (100) est autorisé à envoyer la durée de commutation.

10. Procédé selon l'une quelconque des revendications 7 à 9, dans lequel la première porteuse de liaison montante et la seconde porteuse de liaison montante sont des porteuses de liaison montante différentes.

11. Procédé selon l'une quelconque des revendications 7 à 10, dans lequel la première antenne est commutée de la première porteuse de liaison montante à la seconde porteuse de liaison montante pour l'envoi de données.

12. Équipement utilisateur qui est configuré pour réaliser le procédé selon l'une quelconque des revendications 1 à 6.

13. Dispositif de réseau d'accès qui est configuré pour réaliser le procédé selon l'une quelconque des revendications 7 à 11.

14. Support de stockage lisible par ordinateur, dans lequel le support de stockage lisible par ordinateur est configuré pour stocker un code de programme exécutable, et lorsqu'il est exécuté par un dispositif, le code de programme est utilisé pour mettre en œuvre le procédé selon l'une quelconque des revendications 1 à 6, ou le procédé selon l'une quelconque des revendications 7 à 11.

15. Produit de programme informatique, lorsque le produit de programme informatique s'exécute sur un ordinateur, l'ordinateur est activé pour effectuer le procédé selon l'une quelconque des revendications 1 à 6, ou le procédé selon l'une quelconque des revendications 7 à 11.
